# EUROPEAN PATENT SPECIFICATION

(11) **EP 2 741 196 B1**
(45) Date of publication and mention of the grant of the patent: **18.11.2015**
(21) Application number: 13195655.9
(22) Date of filing: 04.12.2013
(51) Int. Cl.: G06F 3/0485, G06Q 10/10

(54) **POWER-SAVING IN A PORTABLE ELECTRONIC DEVICE OPERATING IN A TELECOMMUNICATION NETWORK**
ENERGIESPARANORDNUNG FÜR EIN ELEKTRONISCHES TRAGBARES GERÄT IN EINEM KOMMUNIKATIONSNETZWERK
ÉCONOMIE D'ÉNERGIE POUR UN DISPOSITIF ÉLECTRONIQUE PORTABLE DANS UN RÉSEAU DE COMMUNICATIONS

(30) Priority: 04.12.2012 US 201213693852
(43) Date of publication of application: 11.06.2014
(73) Proprietor: SAP SE, 69190 Walldorf (DE)
(72) Inventor: Marat, Rolan, San Francisco, CA 94105 (DE); El-Jayousi, Mohannad, 69190 Walldorf (DE); Gauthier, Alain, 69190 Walldorf (DE); Ghorayeb, Roy, 69190 Walldorf (DE); Lavoie, Vincent, Outremont, QC H2V 3G3 (CA); Liang, Xuebo, 69190 Walldorf (DE)
(74) Representative: Richardt Patentanwälte PartG mbB

(56) References cited:
- US-A- 5 745 110
- US-A1- 2010 099 462
- US-A1- 2011 099 500
- US-B1- 6 380 953

## Description

### BACKGROUND

Advances in computing technologies have enabled smaller portable electronic devices, such as mobile phones and tablets, to execute more sophisticated applications. As a result, users are able to perform many of the functions on their mobile phones and tablets that they previously performed on their personal computers and laptops. For example, users are now able to view websites, e-mail, and datas on their mobile phones and tablets. However, this requires a transfer of data from respective servers via base stations to said portable electronic devices. With the increasing number of applications like web applications or data applications running on the portable electronic devices, the amount of data transferred over the air via respective base stations is steadily increasing.

A drawback of smaller devices is their reduced display size. In order to maximize the display size of these smaller devices, touch screen interfaces are often used. The use of a touch screen eliminates the need for a separate keypad such that additional space can be dedicated to a display. In addition, touch screens eliminate the need for a pointer object (e.g., arrow or cursor) within the display. Although touch screens help to maximize display size on mobile phones and tablets, their small displays still present challenges to application developers.

The problem of visual representation of a user interface is further complicated for battery powered portable electronic devices. In an example of a data application of the portable device, a huge amount of data information may be downloaded to the device from a remote server via a cellular digital telecommunication network. In this case a lot of information has to be displayed on a small screen of the device in a user friendly way. At the same time, in order to reduce power consumption during review of the information by the user, processing of the downloaded document by a user of the device has to be limited to user operations on the device which are consuming a smallest amount of power as possible.

US 5,745,110 A discloses a method and apparatus for arranging and displaying task schedule information in a calendar view format.

US 2010/099462 A1 discloses a mobile terminal and method of providing scheduler therein.

US 6 380 953 B1 discloses a method of display scrolling along a timebase and an apparatus for performing the method.

US 2011/099500 A1 discloses a method for historical network event viewing.

### Summary of the invention

It is an objective of the invention to provide for an improved method for power-saving in a telecommunication network, an improved telecommunication network, an improved portable electronic device, an improved method for power-saving in a portable electronic device and an improved computer program product. The invention is described in the independent claims. Embodiments are described in the dependent claims.

Embodiments of the invention provide for a method for power-saving in a telecommunication network, the network comprising a server and a portable electronic device,
- the server comprising a database comprising elements, said elements comprising data entities, wherein each data entity is representative of a data information content and a first time period specified by said data ta entity, each first time period specifying a respective start and end time,
- the portable electronic device comprising a cache table with cache entries and a graphical user interface for displaying the data entities,
- the cache table being adapted for storing the cache entries in rows, each row comprising one or more consecutive cache entries, said cache entry is representing the element indicating at least the end time of said element,
- the graphical user interface being adapted for displaying a timeline, the timeline representing a second time period.

The method further comprises at the device sorting the data entities according to their start times of their respective first time periods for obtaining an ordered set of successive data entities, said ordered set having a sort order which is preferably ascending with respect to the start times, wherein the method further comprises with a current entity being the first data entity in the ordered set that has a start time within the second time period:
a) defining the first row in the cache table as a current row,
b) obtaining from the cache table the last cache entry in the current row,
c) comparing the start time of the current entity with the end time indicated by the retrieved cache entry, wherein in case the start time of the current entity is after the end time of the obtained cache entry, adding the current entity to the current row of the cache table immediately behind the last cache entry, wherein in case the current entity start time is before or equal to the end time indicated by the obtained cache entry, selecting the next row in the cache table directly below the current row as the current row and repeating steps b)-c),
d) selecting the next data entity in the ordered set of successive data entities, said next data entity being the data entity following the current entity according to the order and which has a start time within the second time period, wherein the current entity is now given by said selected next data entity, and repeating steps a)-d),
e) drawing the elements represented via their cache entries of the cache table on the graphical user interface, wherein the elements are drawn in rows identically cloning the row structure in which the elements are represented via their cache entries in the cache table, wherein in each row, the elements are drawn in the sequence as they are represented for the respective row by their cache entries in the cache table.

As an example to step e), in case row 1 of the cache table has element 1, element 2, element 3, and row 2 has element 4, element 5, the drawing will be performed by drawing on the GUI in a top first row element 1, element 2, element 3, and then in a row below this top first row: element 4, element 5.

For any drawing of the elements, the elements will be drawn as graphical elements in a position on the GUI with their start and end times and times being correctly scaled and positioned with respect to the timeline. The graphical elements may be containers like rectangles or ellipses or hexagons or any other suitable containers which permit to visually identify the start and end times on the GUI.

Embodiments of the invention may have the advantage, that data entities may be displayed on a graphical user interface (GUI) of the portable electronic device in an extremely efficient way avoiding any 'wasting' of space of the GUI. Thus, the need for any scrolling operations on the GUI for navigating through the data entities is minimized or even avoided.

In case various display scrolling functions would be used, these functions demand a lot of computing power and hence the portable device executing these scrolling functions consumes a lot of power. As a result, by optimal placement of the data entities in an as compact manner as possible on the GUI, the number of user scrolling operations is drastically minimized. As a consequence, the power consumption of the device will decrease and the operational time of the device in case of operation on battery is increased. Thus the effect of reduction in power consumption can be achieved, when a GUI, which is based on employing the above described low power consuming display function, is used. Nevertheless, the display of the data entities is performed in a user friendly and easily readable manner without any need for visually scaling down (zoom-out) the content on the GUI.

Throughout the description, a data entity is understood as an event that has assigned a time interval defined by for example a start time and an end time. A data event may be a control event comprising control instructions for controlling an industrial automation system. Thus, the portable electronic device may be used to control an industrial automation system, for example a power plant or a car manufacturing system. Industrial automation systems typically comprise a plurality of individual components which operation needs to be controlled. For example, operation of the components typically involves certain time periods in which the components like motors or valves are energized at certain levels. In order to simplify the control of these components, visualization of the events is helpful using the above mentioned data entities. The data entities may directly comprise control instructions to control the automation system.

A portable electronic device may for example be a notebook, laptop, mobile phone, PDA, tablet PC or smartphone.

Information content is understood as any information that is for example describing the event for which the first time period is specified. For example, the data information content may be "turn on machine xyz" or "change pressure in machine xyz" or "measure temperature in machine xyz".

A time period may be given in any time unit. It may indicate a number of milliseconds, seconds, hours, days, months, years. Consequently, a start time or end time may be given in absolute numbers like a date "27.04.2010" or time "1:15 pm" or in relative numbers like "10 seconds after start of machine xyz".

A cache table is understood as a table that may be held in a memory of the device. The table may have rows, wherein each row may store a different number of cache entries. Each cache entry may be stored in a column individual for each row.

A timeline is understood as a graphical element of the GUI which represents a time period like "01.01.2009-31.12.2009" or "Monday - Friday".

In accordance with an embodiment of the invention, the elements further comprise key details, wherein at least some of the data entities have associated a respective key detail, said key detail comprising additional information content for the respective data entity, wherein in case a cache entry is associated with a respective one of the key details, said cache entry associated with the key detail is indicating at least an end time of said key detail, the method further comprising assigning to each key detail a start time and the end time based on the start time or the end time of the data entity associated to said key detail, wherein performing steps a)-e) further comprises
f) selecting a further row from the cache table, said further row directly being located a number of N rows below the current row,
g) obtaining from the cache table the last cache entry in the further row,
h) only in case the start time of the current entity is after the end time of the obtained cache entry and in case the start time of the key detail associated to the current entity is after the end time of the obtained cache entry in the further row, performing the adding of the current entity to the current row of the cache table and additionally adding the key detail to the further row of the cache table immediately behind the last cache entry of said further row,
i) in case the start time of the current entity is after the end time of the obtained cache entry and in case the start time of the key detail associated to the current entity is before or equal the end time of the obtained cache entry in the further row, selecting the next row in the cache table directly below the current row as the current row and repeating steps b)-c).

The additional information content may comprise textual or graphical information which may help for example to explain the purpose of the data entity. In the above example, the data information content of a given data entity may be "turn on machine xyz" and the key detail for the given data entity may be "necessary for reason abc".

The above embodiment may have the advantage that in addition to the data entities further information can be provided in addition to each data entity. Preferably, the device comprises selection means to enable or disable the visual display of the further information on the GUI. However, in case the display of the further information is enabled, both, the data entities and the key details can be presented on the GUI in a compact manner such that the number of user scrolling operations is drastically minimized. As a consequence, the power consumption of the device will be minimized even though the amount of information displayed on the GUI is increased.

In accordance with an embodiment of the invention, in case in step h) it is determined that the start time of the key detail associated to the current entity is after the end time of the obtained cache entry in the further row, the method further comprises repeating steps f)-i) for an increasing number of N starting with N=1 until N equals M, wherein N and M are integer values, wherein the value M is associated with the key detail of the current entity.

Thus, the vertical size of the displayed key details can be predefined in number M of rows. In other words, the box which may be drawn on the GUI may have an extension in vertical direction of the GUI with a size comprising M times the extension of a row in the vertical direction. This permits to individually adapt the amount of information that is displayed via the key details on the GUI. Nevertheless, the arrangement of the elements on the GUI is still performed in a manner which minimizes scrolling operations on the GUI.

Thus, for example the value M is a customizable parameter for each key detail or each data entity having an associated key detail.

In accordance with an embodiment of the invention, in case a selected row in the cache table is not yet available, the method further comprises adding an empty new row to the cache table at the position in the cache table where the row was intended to be selected.

In accordance with an embodiment of the invention, the method further comprises
- establishing a communication channel via the telecommunication network between the device and the server,
- sending a request to the server, the request requesting the data entities, and in response receiving from the server the data entities,
- sending a request to the server, the request requesting only the key details which associated data entities have a start time within the second time period, and in response receiving from the server the key details.

This may help to further minimize the energy consumption at the portable device since a communication with the server is only performed in case data entities received at the device can actually be displayed on the GUI with respect to the actual timeline of the GUI.

In accordance with an embodiment of the invention, the portable electronic device comprises a battery for powering up the portable electronic device, wherein the portable electronic device is operable for switching into a power saving mode by disabling a functionality of displaying the elements on the graphical user interface using scrolling display functions on the graphical user interface of the device. This may be possible without the loss of any information to the user of the device due to the very efficient way of displaying the elements on the GUI.

In accordance with an embodiment of the invention, the start time and/or the end time of the key detail is based on the start time or the end time of the data entity associated to said key detail by shifting the start time or the end time of the data entity by a predefined timespan. Typically, a key detail has not natively associated a start time or end time since the start and end time are given by the respective data entity and the key detail only serves as a means for storing additional information for the data entity. Thus, the method suggests to associate an artificial or fictive start time and/or the end time to the key detail which is based on the start time or the end time of the data entity associated to said key detail. The fictive start time and/or end time may be obtained by shifting the start time or the end time of the data entity by a predefined timespan, respectively. The predefined timespan may be a predefined number of time units like days, months, seconds, hours etc. It may also be zero. In this latter case, for example the key detail will always be displayed in a box left aligned with the box that shows the associated data entity.

It has to be noted here again that for drawing of both elements, i.e. the data entities and the key details, the elements will be drawn as graphical elements in a position on the GUI with their start and end times and times being correctly scaled and positioned with respect to the timeline.

For example, the graphical user interface is adapted for drawing the elements using image coordinates of the graphical user interface, wherein the method further comprising for drawing the elements in step d):
- determining for the element to be drawn the time in the timeline that is located as close as possible to the start time of the element,
- determining for said determined time as a horizontal start coordinate the respective coordinate on the graphical user interface,
- determining the number of units of time between the start time and the end time of the timespan,
- calculating the width of the element by multiplying the difference between the start time and the end time of the element with the number of coordinates per unit of time,
- determining the vertical coordinate of the row where the element is to be placed,
- determining the height of the element,
- drawing the element as a graphical container, using as a start coordinate of the container the vertical coordinate of the row and the determined horizontal start coordinate, and using as a height of the container the height of the element, and using as a width of the container the width of the element.

For example, the top left corner of the row where the element is to be placed is used as the vertical coordinate of the row. Alternatively, the top right corner or the bottom left corner or any other part of the row may be used for that purpose.

The calculation of the vertical coordinate of a row can easily be achieved by for example knowing the height of each row and the vertical starting coordinate of the very first row. In case row 1 starts at (x,y) coordinates (0,0) and each row has a height of 50 pixels, row number 3 has a start coordinate (0,100), i.e. a vertical coordinate "100".

In another aspect, the invention relates to a telecommunication network for power-saving, the network comprising a server and a portable electronic device,
- the server comprising a database comprising elements, said elements comprising data entities, wherein each data entity is representative of a data information content and a first time period specified by said data entity, each first time period specifying a respective start and end time,
- the portable electronic device comprising a cache table with cache entries and a graphical user interface for displaying the data entities,
- the cache table being adapted for storing the cache entries in rows, each row comprising one or more consecutive cache entries, said cache entry is representing the element indicating at least the end time of said element,
- the graphical user interface being adapted for displaying a timeline, the timeline representing a second time period,
- the portable electronic device comprising a processor and a memory, the cache table being stored in the memory, the memory comprising computer executable instructions that cause the processor for sorting the data entities according to their start times of their respective first time periods for obtaining an ordered set of successive data entities, said ordered set having a sort order, wherein the instructions further cause the processor with a current entity being the first data entity in the ordered set that has a start time within the second time period:
   a) defining the first row in the cache table as a current row,
   b) obtaining from the cache table the last cache entry in the current row,
   c) comparing the start time of the current entity with the end time indicated by the retrieved cache entry, wherein in case the start time of the current entity is after the end time of the obtained cache entry, adding the current entity to the current row of the cache table immediately behind the last cache entry, wherein in case the current entity start time is before or equal to the end time indicated by the obtained cache entry, selecting the next row in the cache table directly below the current row as the current row and repeating steps b)-c),
   d) selecting the next data entity in the ordered set of successive data entities, said next data entity being the data entity following the current entity according to the order and which has a start time within the second time period, wherein the current entity is now given by said selected next data entity, and repeating steps a)-d),
   e) drawing the elements represented via their cache entries of the cache table on the graphical user interface, wherein the elements are drawn in rows identically cloning the row structure in which the elements are represented via their cache entries in the cache table, wherein in each row, the elements are drawn in the sequence as they are represented for the respective row by their cache entries in the cache table.

In another aspect, the invention relates to a portable electronic device, the device being adapted for communicating with a server over a telecommunication network,
- the server comprising a database comprising elements, said elements comprising data entities, wherein each data entity is representative of a data information content and a first time period specified by said data entity, each first time period specifying a respective start and end time,
- the portable electronic device comprising a cache table with cache entries and a graphical user interface for displaying the data entities,
- the cache table being adapted for storing the cache entries in rows, each row comprising one or more consecutive cache entries, said cache entry is representing the element indicating at least the end time of said element,
- the graphical user interface being adapted for displaying a timeline, the timeline representing a second time period,
- the portable electronic device comprising a processor and a memory, the cache table being stored in the memory, the memory comprising computer executable instructions that cause the processor for sorting the data entities according to their start times of their respective first time periods for obtaining an ordered set of successive data entities, said ordered set having a sort order, wherein the instructions further cause the processor with a current entity being the first data entity in the ordered set that has a start time within the second time period:
   a) defining the first row in the cache table as a current row,
   b) obtaining from the cache table the last cache entry in the current row,
   c) comparing the start time of the current entity with the end time indicated by the retrieved cache entry, wherein in case the start time of the current entity is after the end time of the obtained cache entry, adding the current entity to the current row of the cache table immediately behind the last cache entry, wherein in case the current entity start time is before or equal to the end time indicated by the obtained cache entry, selecting the next row in the cache table directly below the current row as the current row and repeating steps b)-c),
   d) selecting the next data entity in the ordered set of successive data entities, said next data entity being the data entity following the current entity according to the order and which has a start time within the second time period, wherein the current entity is now given by said selected next data entity, and repeating steps a)-d),
   e) drawing the elements represented via their cache entries of the cache table on the graphical user interface, wherein the elements are drawn in rows identically cloning the row structure in which the elements are represented via their cache entries in the cache table, wherein in each row, the elements are drawn in the sequence as they are represented for the respective row by their cache entries in the cache table.

In another aspect, the invention relates to a method for power-saving in a portable electronic device, the device being adapted for communicating with a server over a telecommunication network,
- the server comprising a database comprising elements, said elements comprising data entities, wherein each data entity is representative of a data information content and a first time period specified by said data entity, each first time period specifying a respective start and end time,
- the portable electronic device comprising a cache table with cache entries and a graphical user interface for displaying the data entities,
- the cache table being adapted for storing the cache entries in rows, each row comprising one or more consecutive cache entries, said cache entry is representing the element indicating at least the end time of said element,
- the graphical user interface being adapted for displaying a timeline, the timeline representing a second time period,
the method comprising at the device sorting the data entities according to their start times of their respective first time periods for obtaining an ordered set of successive data entities, said ordered set having a sort order, wherein the method further comprises with a current entity being the first data entity in the ordered set that has a start time within the second time period:
a) defining the first row in the cache table as a current row,
b) obtaining from the cache table the last cache entry in the current row,
c) comparing the start time of the current entity with the end time indicated by the retrieved cache entry, wherein in case the start time of the current entity is after the end time of the obtained cache entry, adding the current entity to the current row of the cache table immediately behind the last cache entry, wherein in case the current entity start time is before or equal to the end time indicated by the obtained cache entry, selecting the next row in the cache table directly below the current row as the current row and repeating steps b)-c),
d) selecting the next data entity in the ordered set of successive data entities, said next data entity being the data entity following the current entity according to the order and which has a start time within the second time period, wherein the current entity is now given by said selected next data entity, and repeating steps a)-d),
e) drawing the elements represented via their cache entries of the cache table on the graphical user interface, wherein the elements are drawn in rows identically cloning the row structure in which the elements are represented via their cache entries in the cache table, wherein in each row, the elements are drawn in the sequence as they are represented for the respective row by their cache entries in the cache table.

In another aspect, the invention relates to a computer program product, in particular a computer readable medium, the computer program product carrying computer executable code for execution by a processor controlling an apparatus, wherein execution of the instructions cause the processor to perform the method steps as claimed in the previous method claims.

### BRIEF DESCRIPTION OF THE DRAWINGS

FIG. 1 illustrates a GUI to display data entities.
FIG. 2 illustrates a GUI to display data entities.
FIG. 3 illustrates a GUI to display data entities.
FIG. 4 illustrates a method to determine the placement of data entities and associated detail boxes.
FIG. 5 illustrates a row cache.
FIG. 6 shows an exemplary architecture of a telecommunication system.

### DETAILED DESCRIPTION

It has to be noted that in the following without any restriction to generality, it is assumed that the graphical container used to display an element on the GUI is a rectangular box. However, as mentioned above, it may also be a circular or elliptic graphical element.

Further, it has to be noted that for the sake of simplicity, in the following a key detail is denoted as a "detail box" since its graphical representation will be a box. Nevertheless, a key detail is a piece of information that is assigned to a certain data entity. Embodiments may be discussed in systems to efficiently display information about data entities. In an embodiment, the granularity of a scale displayed on a graphical user interface may be obtained. Coordinates of rows in the graphical user interface may be determined. Visual representations of data entities to be displayed on the graphical user interface may be sorted. From the sorted visual representations, visual representations that fit into a viewable area in the graphical user interface may be identified. A start coordinate and width of each identified visual representation may be determined. A row to place each identified visual representation may be identified. Dimensions of each identified visual representation may be calculated based on dimensions of each identified visual representation's identified row.

In an embodiment, one or more rows may be identified to place a detail box associated with an identified visual representation. The detail box is the graphical representation of the key detail associated with its respective data entity. Dimensions of the detail box may be calculated. In an embodiment, a cache with row information may be accessed. In an embodiment, the scale unit closest to a start attribute value of each identified visual representation's underlying data object may be determined. The scale unit may be associated with the displayed scale. A coordinate corresponding to the closest scale unit may be assigned as the start coordinate of each identified visual representation. In an embodiment, the cache may include one or more associations between a row and a visual representation of a data object and/or a detail box placed in the row.

Attributes of data entities may indicate a range of values. For example, in an embodiment, a data entity may include one or more attributes indicating the time period for which the data entity is valid. The time period may be implemented by either defining a single time period attribute associated with the data entity or by defining a start date attribute and an end date attribute associated with the data entity.

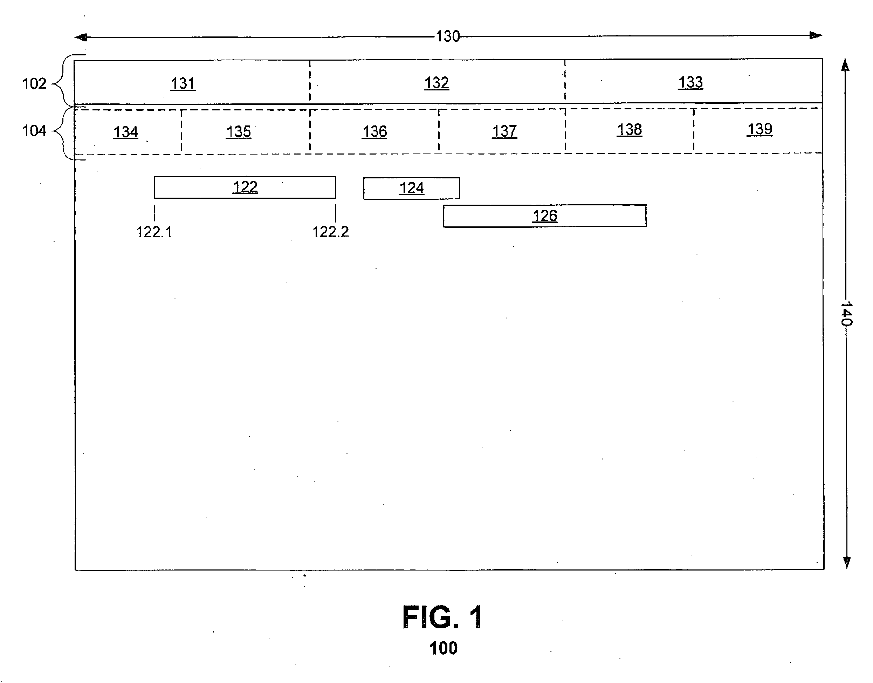

FIG. 1 illustrates a GUI 100 to display data entities. Data entities may be displayed on a GUI 100 in an organized manner to visually convey information about the data entities. The GUI 100 may display one or more scales 102, 104 on the x-axis 130 and/or y-axis 140. The GUI 100 may display data entities such as 122, 124, and 126 mapped in relationship to the attributes on the x-axis 130 and/or y-axis 140. The attribute(s) displayed across the x-axis 130 and/or y-axis 140 may be presented as one or more scales displaying attribute values (for example, 102 and 104). If multiple scales are presented on a particular axis, each scale may be graduated based on different granularities. For example, scales 102 and 104 may represent time periods. Scale 102 may be graduated into year units. Specifically, each of 131, 132, and 133 may represent a year. Scale 104 may be graduated on a semi-annual basis. Specifically, 134 - 139 may each represent half of a year.

There may be a correlation between the multiple scales on a particular axis. For example, there may be a correlation between the units of scale 102 and scale 104. Time period 131 on scale 102 may represent a particular year, such as year 2012. The time period 134 may represent the first half of the year 2012, and the time period 135 may represent the second half of year 2012. In an embodiment the correlated portions of multiple scales may be presented directly above/below (x-axis) or directly beside (y-axis) each other. For example, time period 131 may be located directly above/below corresponding time periods 134 and 135.

The scale(s) displayed on the x-axis and/or y-axis 102 and 104 may be a range of contiguous values and/or discrete values. For example, the scales 102 and 104 may represent a contiguous time period of three years.

One or more scales (not shown) may be presented on the y-axis 140. The y-axis scale(s) may be presented and function similar to the x-axis scale(s) described above. Although only two axes (x and y) are illustrated in FIG. 1, a person having ordinary skill in the art will appreciate that GUI 100 may be extended to display additional axes. For example, a z-axis (with corresponding scale(s)) may be displayed by utilizing shading to show the third dimension. In a further example, the z-axis (with corresponding scale(s)) may be presented by displaying GUI 100 on a display which is 3-dimension (3D) compatible.

The data entity(s) displayed on the GUI 100 may be positioned and presented based on respective attribute value(s) of the data entity(s) relative to the x-axis and/or y-axis scale(s) of GUI 100. In an example embodiment, scale 102 may be displayed on the GUI 100 and may indicate a time period range as explained above. Data entities 122, 124, and 126 may be control events for an industrial machine. Each data entity represented by 122, 124, and 126 may include attributes indicating the duration period of the respective data entity. The data entity visual representations 122, 124, and 126 may be presented to visually convey the span of the duration periods, and the start/end of the duration periods. For example, time periods 131, 132, and 133 may represent years 2012, 2013, and 2014 respectively. Data entity 122 may have a duration period from April 14, 2012 to January 23, 2013. Thus, data entity 122 may be presented as a horizontal bar extending from start point 122.1 positioned below time period 131 to end point 122.2 positioned below time period 132. The start point 122.1 may line up with a point in the time period 131 which approximately corresponds to April 14, 2012, and the end point 122.2 may line up with a point in the time period 132 which approximately corresponds to January 23, 2013.

Multiple scales 102 and 104 may be presented on the GUI 100 and the data entity visual representations 122, 124, and 126 may be presented relative to the multiple scales. For example, time periods 134, 135, and 136 may represent the first half of year 2012, the second half of year 2012, and the first half of year 2013 respectively. Data entity 122 may have a duration time period from April 14, 2012 to January 23, 2013 as described previously. Thus, data entity 122 may be presented as a horizontal bar extending from start point 122.1 positioned below time periods 131 and 134 to end point 122.2 positioned below time periods 132 and 136. The start point 122.1 may line up with points in the time periods 131 and 134 which approximately correspond to April 14, 2012, and the end point 122.2 may line up with points in the time periods 132 and 136 which approximately correspond to January 23, 2013. The GUI 100 may include multiple axes and one or more scales on each of the multiple axes. Each axis (and the associated scale(s)) may represent different data entity attributes. Thus, the data entity(s) presented on the GUI 100 may be presented relative to the scale(s) on each axis. For example, the scale(s) on an x-axis may represent time periods and the scale(s) on a y-axis may represent temperature ranges. Consequently, the bars 122, 124, and 126 representing data entities such as industrial machine control entities may be displayed based on the data entities' respective duration periods and temperature ranges. The length of the bars 122, 124, and 126 may correspond to the duration period, and the width of the bars 122, 124, and 126 may correspond to the temperature range. Similarly, data entities may be displayed relative to three axes by displaying the data entities as 3D bars and varying the length, width, and depth of the bars to correspond to the scale(s) on the three axes.

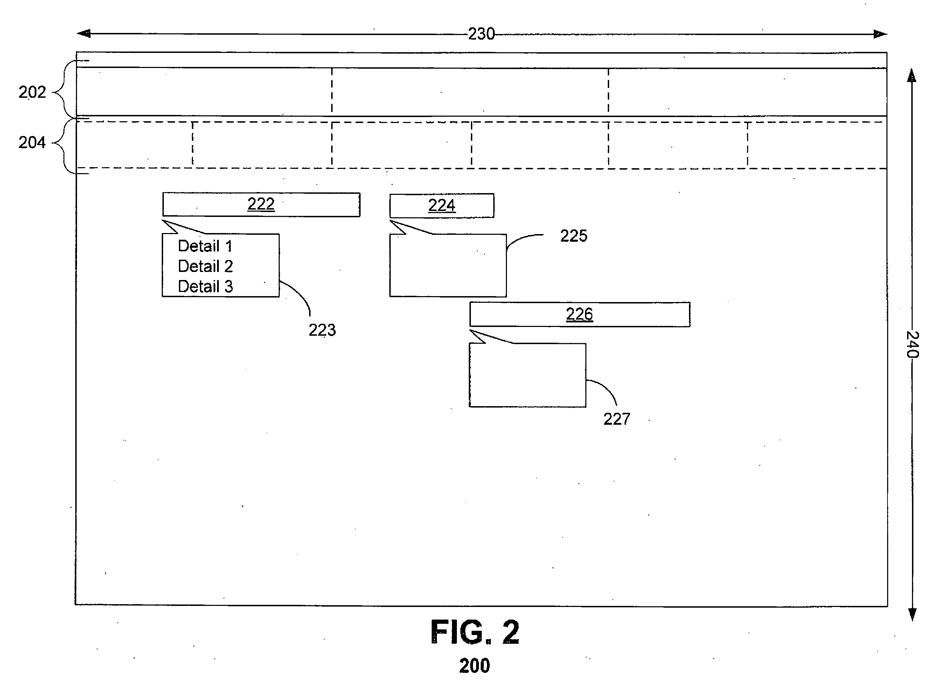

FIG. 2 illustrates a GUI 200 to display data entities. Data entities may be displayed on a GUI 200 in an organized manner to visually convey information about the data entities. The GUI 200 may display one or more scales 202 and 204 on the x-axis 230 and/or y-axis 240. The GUI 200 may display data entities such as 222, 224, and 226 mapped in relationship to the attributes on the x-axis 230 and/or y-axis 240 as discussed in the description pertaining to FIG. 1 above. The GUI 200 may display detail boxes 223, 225, and 227 which present details about data entities associated with data entity visual representations 222, 224, and 226 respectively.

The detail boxes 223, 225, and 227 may display attributes and/or other metadata associated with the respective data entities. The information presented in the detail boxes 223, 225, and 227 may be customized through GUI 200 and/or another GUI so that only the required details are displayed. The size of the detail boxes 223, 225, and 227 may be customized through GUI 200 and/or another GUI to tweak the readability of the information presented in the detail boxes. The user may be able to dynamically change the size of a detail box by, for example, selecting the border(s) of the detail box and dragging the border(s) of the detail box to a desired position. The user may select and drag the border(s) of the detail box by, for example, his/her finger (when utilizing a touch screen), a mouse, keyboard, trackball, etc. All detail boxes 223, 225, and 227 may be displayed without the need for a user to perform any actions on data entity visual representations 222, 224, and 226. Specifically, the detail boxes may be displayed without the need for the user to click on or hover a cursor over the data entity visual representations 222, 224, and 226.

A toggle switch (not shown) may be presented on the GUI 200 to turn on/off the display of detail boxes. Activating the toggle switch when the detail boxes are displayed may remove all detail boxes 223, 225, and 227 from the GUI 200. In addition, the data entity visual representations 222, 224, and 226 may be repositioned on the GUI 200 to better utilize the space realized from not displaying the detail boxes 223, 225, and 227. Activating the toggle switch when the detail boxes 223, 225, and 227 are not displayed may re-display the detail boxes 223, 225, and 227 again. A person having ordinary skill in the art will appreciate that the toggle switch may be implemented in many ways including a button, radio buttons, check boxes, drop down menus, etc. The toggle switch may not be presented on the GUI 200, but may be implemented through output from a motion sensor within the device displaying the GUI 200. For example, shaking and/or tilting a PC tablet in a particular manner may toggle the display of detail boxes.

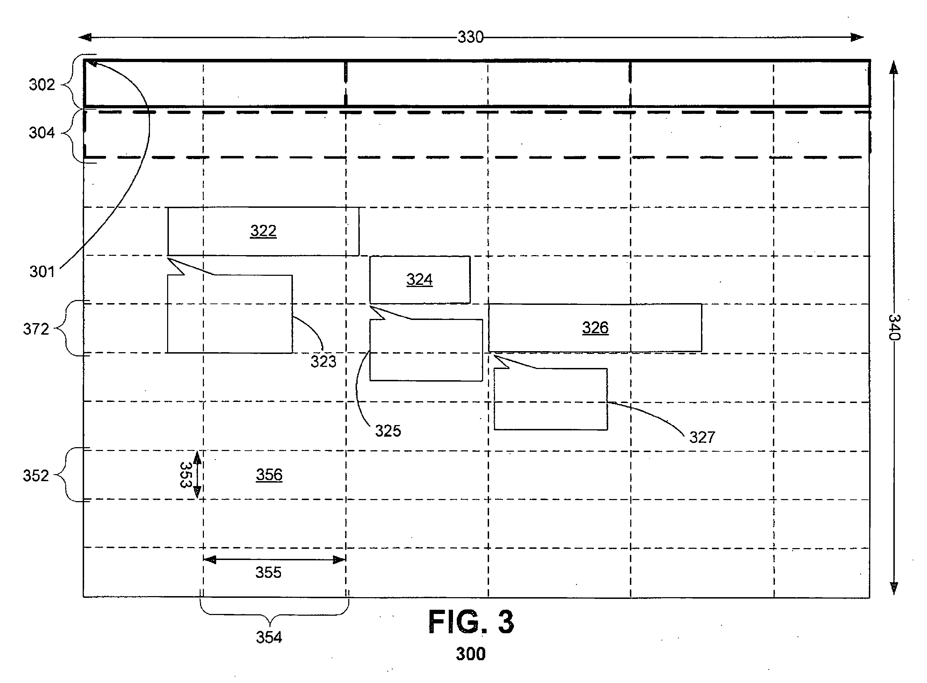

FIG. 3 illustrates a GUI 300 to display data entities according to an embodiment. Data entities may be displayed on GUI 300 in an organized manner to visually convey information about the data entities. The GUI 300 may display one or more scales 302 and 304 on the x-axis 330 and/or y-axis 340. The GUI 300 may display data entities such as 322, 324, and 326 mapped in relationship to the attributes on the x-axis 330 and/or y-axis 340 as discussed in the description pertaining to FIG. 1 above. The GUI 300 may display detail boxes 323, 325, and 327 which present details about data entities associated with data entity visual representations 322, 324, and 326 respectively as discussed in the description pertaining to FIG. 2 above.

The information presented on GUI 300 may be drawn and/or rendered based on a coordinate system. The visual information may be drawn based on a Cartesian coordinate system using absolute values (i.e., (x,y) coordinates without regard to the sign of x or y). a corner, such as the top left corner 301 of the GUI 300 may represent the origin (0,0) of the coordinate system. The information presented on the GUI 300 may be drawn by using the origin 301 as a reference point.

The scales 302 and 304 may be drawn relative to the reference point 301. The drawing of scales 302 and 304 may be determined by calculating the point of placement (i.e., (x,y) coordinates) of the top left corner (or origin) of the scales 302 and 304, and the dimensions (i.e., the width and height) of the scales 302 and 304. For example, the point of placement of the origin of scale 302 may be (0,0), the width may be 1920 pixels, and the height may be 50 pixels. Similarly, the point of placement of the origin of scale 304 may be (0,50) since scale 304 is right below scale 302, the width may be 1920 pixels, and the height may be 50 pixels. The above information such as origin and dimensions may be provided via a programming language (dynamically or statically), and upon execution of the programming language, the scales 302 and 304 may be drawn on the GUI 300.

The GUI 300 may be divided into rows such as 352 and columns such as 354. The intersection of a row and a column such as 356 may be referred to as a tile. The rows and columns may be positioned based on the coordinate system discussed above. The rows and columns may not be displayed on the GUI 300, but may be used to draw information on GUI 300 such as visual representations 322, 324, and 326, and their associated detail boxes 323, 325, and 327. The height 353 of all rows in GUI 300 may be equal and the width 355 of all columns in GUI 300 may be equal. The row height 353 may be dynamically determined based on the content displayed on GUI 300.

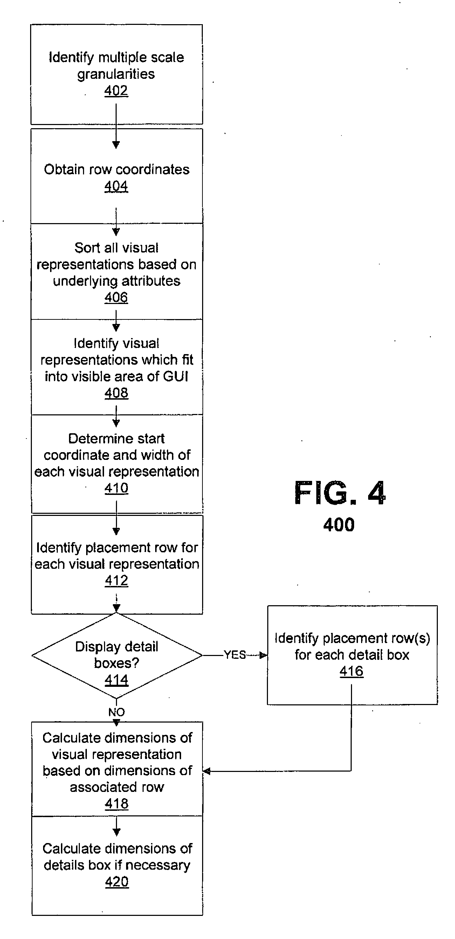

FIG. 4 illustrates a method 400 to determine the placement of data entities and associated key details on the GUI. The method 400 may identify the granularities of the scales displayed on a GUI 402. For example, the method 400 may determine that a scale with a yearly time granularity and a scale with a monthly granularity are displayed on the GUI. The method 400 may obtain the coordinates of the rows of the GUI 404. The method 400 may then sort the data entities based on attributes of the underlying data entities 406. For example, the method 400 may sort the data entities based on the start date of the data entities. The method 400 may identify the data entities which fit into the visible area displayed on the GUI 408.

For example, the method 400 may identify the data entities with start and end dates within the date interval displayed by the scales presented on the GUI. For each data entity that fits into the visible area, the method 400 may identify the data entity's start coordinate and width 410. For each data entity that fits into the visible area, the method 400 may determine the corresponding row in which the data entity is to be placed 412. If detail boxes are to be displayed on the GUI 414, the method 400 may also determine the row(s) in which each data entity's detail box is to be placed 416. The method 400 may calculate the dimensions of each data entity based on the dimensions of the visual representation's associated row 418. For example, the method 400 may calculate the height and y-coordinate of each data entity based on the height and y-coordinate of the associated row.

If detail boxes are to be displayed on the GUI, the method 400 may calculate the dimensions of each detail box based on the associated data entity 420. For example, the method 400 may calculate the x-coordinate, the y-coordinate, and the width of the detail box based on the start and end attributes of the associated data entity and/or the coordinates of the associated data entity.

The method 400 may determine the start coordinate and width of each data entity 410 by identifying the closest unit to the start attribute value of the data entity. The closest unit may be associated with one or more scales displayed on the GUI. In certain instances the closest unit may be exactly equal to the value of the start attribute of the underlying data entity. The method 400 may then determine the coordinate on the GUI corresponding to the closest unit and assign this coordinate as the start coordinate of the data entity. The method 400 may calculate the number of viewable units (for example, the number of days) shown by one or more scales displayed on the GUI.

Next, the method 400 may calculate the number of coordinate units per viewable scale unit. For example, the method 400 may calculate number of pixels (coordinate units) per day (viewable scale unit). In other words, the number of coordinate units per viewable scale unit = number of coordinate units in the viewable portion of the scale / number of viewable units shown by the scale. The method 400 may determine the difference between the start attribute (or the closest unit to the start attribute) and end attribute of the data entity (i.e., the width of the data entity in viewable scale units) and use the difference to determine the width of the data entity in coordinate units through the equation: width in coordinate units = difference in viewable scale units * number of coordinate units per viewable scale unit.

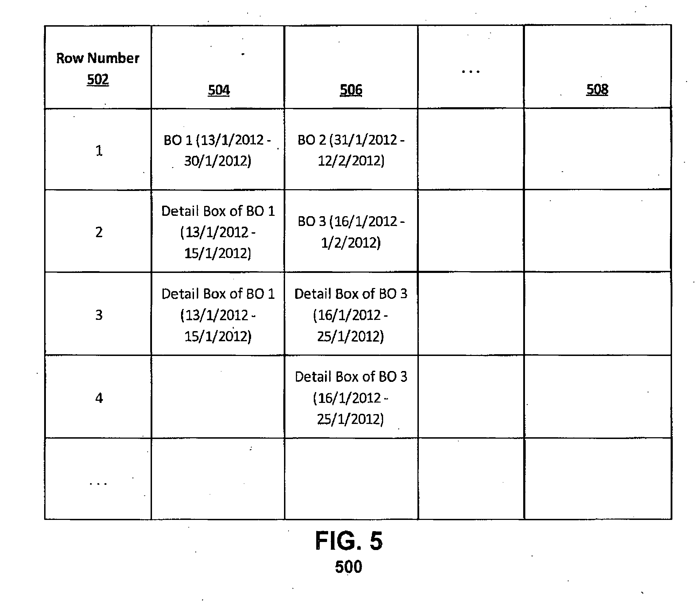

The method 400 may determine the placement row for each data entity and/or key detail utilizing information stored in a row cache. FIG. 5 illustrates such a row cache 500. The cache 500 may associate rows with cache entries (i.e. elements like visual representations and/or key details) placed in the rows. The cache 500 may be keyed by a row identifier such as a row number 502. The cache 500 may store information pertaining to each cache entry 504 - 508. The information pertaining to each cache entry (cache entry in a row) may include the start scale unit (start attribute) and end scale unit (end attribute) of the cache entry.

The method 400 may determine the placement row for a current data entity of an element like a data entity or a key detail to be inserted in a row by fetching the information from a row in the cache 500. The method 400 may retrieve the last entry (i.e., cache entry N 508) in the fetched row. In the following, it is assumed that the entity to be placed on the GUI is a data entity. I.e. it is assumed that a visual representation of a data entity on the GUI is desired.

The method 400 may compare the start scale unit (start attribute) of the data entity to the end scale unit (end attribute) of the retrieved last cache entry. If the start scale unit of the current data entity is lower than or equal to the end scale unit of the retrieved last cache entry, the method 400 may iterate through the other rows in the cache 500 and repeat the above steps until the start scale unit of the current data entity is higher than the end scale unit of the current fetched row's last cache entry. In case there is no row available anymore which already has a cache entry, a new row is generated directly below the last fetched row and the a cache entry is inserted on the very beginning of said new row representing the current data entity. Once such a row is fetched, if a key detail associated with the current data entity is to be displayed, the method 400 may calculate the start scale unit and the end scale unit of the corresponding detail box (visual representation of the key detail that is to be drawn on the GUI). The method 400 may compare the start scale unit of the key detail with the end scale unit of the row entries that occupy one or more rows subsequent to the current fetched row. The number of subsequent rows examined may depend on the number of rows required to place the key detail since the key detail may span more than one row. If the key detail cannot be placed in the subsequent row(s), the method 400 may iterate through the rows in the cache 500 and repeat the above steps until the key detail has room for placement. Once such a row is fetched, the method 400 may then insert the current data entity in the current fetched row and the associated key detail in the subsequent row(s).

For example, if key details are not displayed on the GUI, the method 400 may retrieve the last cache entry (i.e., cache entry N 508) in the current fetched row. The method 400 may compare the start scale unit (start attribute) of the current data entity to the end scale unit (end attribute) of the retrieved last cache entry. If the start scale unit of the current data entity is lower than or equal to the end scale unit of the retrieved last cache entry, the method 400 may iterate through the rows in the cache 500 and repeat the above steps until the start scale unit of the current data entity is higher than the end scale unit of the currently fetched row's last cache entry. Once such a row is fetched, the method 400 may then insert the current data entity in the current fetched row.

If method 400 is unable to insert the current data entity and/or the associated key detail in the existing rows of cache 500, the method 400 may insert the required row(s) to place the current data entity and/or the associated key detail.

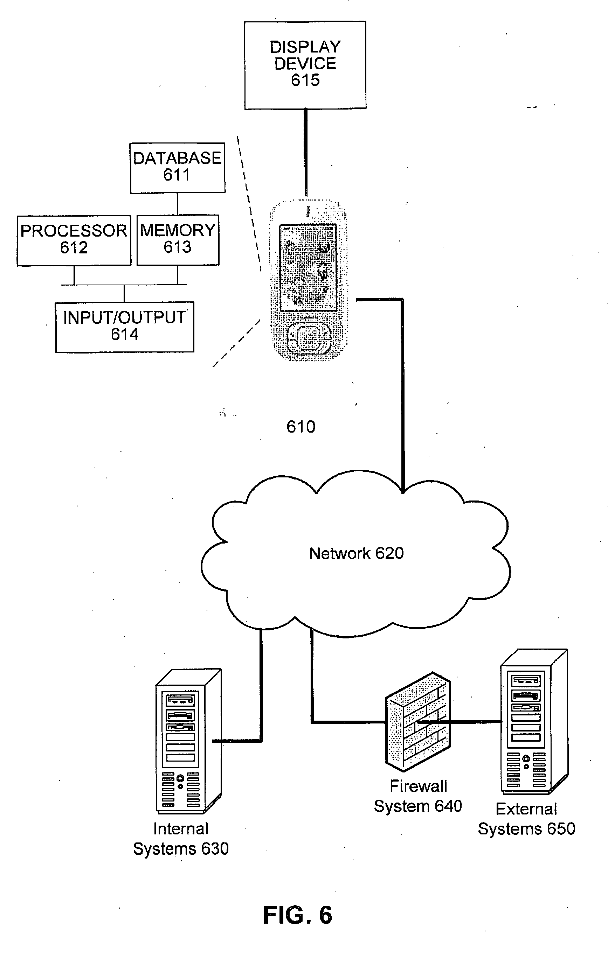

A person having ordinary skill in the art will appreciate that although the discussion above refers to the top left corner of the GUI, the data entity visual representations, etc., as origins, any point within/on the border of the entities may be fixed as the origin in other embodiments. Thus, the calculations explained above may vary accordingly. The foregoing discussion refers to pixels as the unit for measuring dimensions such as the height and width of columns, rows, etc. However, any unit capable of measuring absolute/relative distance may be utilized in other embodiments. Similarly, although the above discussion illustrates drawing/rendering data entity related information on a Cartesian coordinate system, the discussed principles may be applied to any other coordinate system including a Polar coordinate system, a cylindrical/spherical coordinate system, and a homogeneous coordinate system. FIG. 6 shows an exemplary telecommunication system which may use the above described method. The mobile telecommunication device like for example a smartphone running an application to view, create, or modify data entities 610 may comprise a display device 615. Further, it may communicate with a server called "internal system 630" or a server called "external system 650" through the network 620 and firewall system 640. Generally, the system running an application to view, create, or modify data entities 610 may include a battery powered portable appliance like a laptop computer, tablet PC, client computer, mobile phone. The display device 615 may include a monitor, a touch screen, a tablet PC screen, a mobile phone screen, and any other displays. The existing internal systems 630 may include a server and may provide data entities and/or other data. The external systems 650 may include a server and may be maintained by a third party, such as an information service provider, and may contain data entities and/or other data, that may be updated by the third party on a periodic basis. The system running an application to view, create, or modify data entities 610 may interact with these external systems to obtain updates on the data entities through a firewall system 640 separating the internal systems from the external systems.

Each of the systems in FIG. 6 may contain a processing device 612, memory 613, a database 611, and an input/output interface 614, all of which may be interconnected via a system bus. In various embodiments, each of the systems 610, 630, 640, and 650 may have an architecture with modular hardware and/or software systems that include additional and/or different systems communicating through one or more networks.

Memory 613 may contain different components for retrieving, presenting, changing, and saving data. Memory 613 may include a variety of memory devices, for example, Dynamic Random Access Memory (DRAM), Static RAM (SRAM), flash memory, cache memory, and other memory devices. Additionally, for example, memory 613 and processing device(s) 612 may be distributed across several different computers that collectively comprise a system.

Database 611 may include any type of data storage adapted to searching and retrieval. The database 611 may include SAP database (SAP DB), Informix, Oracle, DB2, Sybase, and other such database systems. The database 611 may include SAP's HANA (high performance analytic appliance) in-memory computing engine and other such in-memory databases.

Processing device 612 may perform computation and control functions of a system and comprises a suitable central processing unit (CPU). Processing device 612 may comprise a single integrated circuit, such as a microprocessing device, or may comprise any suitable number of integrated circuit devices and/or circuit boards working in cooperation to accomplish the functions of a processing device. Processing device 612 may execute computer programs, such as object-oriented computer programs, within memory 613.

Preferably, the smartphone 610 requests data entities stored in a database of the server 630 by establishing a communication channel via the telecommunication network 620 between the device 610 and the server 630 or 650. Then, the smartphone 610 is sending a request to the server 630, the request requesting the data entities, and in response the smartphone is receiving from the server the requested data entities. Further, the smartphone may send another request to the server, the request requesting only the key details which associated data entities have a start time within the time period that is currently actively displayed on the display device 615. In response, the smartphone receives from the server the key details.

The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, some of the described embodiments may include software and hardware, but some systems and methods consistent with the present invention may be implemented in software or hardware alone. Additionally, although aspects of the present invention are described as being stored in memory, this may include other computer readable media, such as secondary storage devices, for example, solid state drives, or DVD ROM; the Internet or other propagation medium; or other forms of RAM or ROM.

## Claims

1. A method for power-saving in a telecommunication network (620), the network (620) comprising a server (630; 650) and a portable electronic device,
- the server (630; 650) comprising a database comprising elements, said elements comprising data entities (122; 124; 126; 222; 224; 226), wherein each data entity is representative of a data information content and a first time period specified by said data entity, each first time period specifying a respective start and end time, wherein the start and end times comprise the lower limit and the upper limit of a time interval defined by the first time period respectively,
- the portable electronic device comprising a cache table (500) with cache entries and a graphical user interface for displaying the data entities (122; 124; 126; 222; 224; 226),
- the cache table (500) being adapted for storing the cache entries in rows, each row comprising one or more consecutive cache entries, said cache entry is representing the element indicating at least the end time of said element,
- the graphical user interface being adapted for displaying a timeline, the timeline representing a time interval defined by a second time period,
the method comprising at the device sorting the data entities (122; 124; 126; 222; 224; 226) according to their start times of their respective first time periods for obtaining an ordered set of successive data entities (122; 124; 126; 222; 224; 226), said ordered set having a sort order, wherein the method further comprises, with a current entity being the first data entity in the ordered set that has a start time within the second time period, the steps of:
a) defining the first row in the cache table (500) as a current row,
b) obtaining from the cache table (500) the last cache entry in the current row,
c) comparing the start time of the current entity with the end time indicated by the retrieved cache entry, wherein in case the start time of the current entity is after the end time of the obtained cache entry, adding the current entity to the current row of the cache table (500) immediately behind the last cache entry, wherein in case the current entity start time is before or equal to the end time indicated by the obtained cache entry, selecting the next row in the cache table (500) directly below the current row as the current row and repeating steps b)-c),
d) selecting the next data entity in the ordered set of successive data entities (122; 124; 126; 222; 224; 226), said next data entity being the data entity following the current entity according to the order and which has a start time within the second time period, wherein the current entity is now given by said selected next data entity, and repeating steps a)-d),
e) drawing the elements represented via their cache entries of the cache table (500) on the graphical user interface, wherein the elements are drawn in rows identically cloning the row structure in which the elements are represented via their cache entries in the cache table (500), wherein in each row, the elements are drawn in the sequence as they are represented for the respective row by their cache entries in the cache table (500).

2. The method of claim 1, wherein the elements further comprise key details (223; 225; 227), wherein at least some of the data entities (122; 124; 126; 222; 224; 226) have associated a respective key detail, said key detail (223; 225; 227) comprising additional information content for the respective data entity, wherein in case a cache entry is associated with a respective one of the key details (223; 225; 227), said cache entry associated with the key detail (223; 225; 227) is indicating at least an end time of said key detail, the method further comprising assigning to each key detail (223; 225; 227) a start time and the end time based on the start time or the end time of the data entity associated to said key detail, wherein performing steps a)-e) further comprises
f) selecting a further row from the cache table (500), said further row directly being located a number of N rows below the current row,
g) obtaining from the cache table (500) the last cache entry in the further row,
h) only in case the start time of the current entity is after the end time of the obtained cache entry and in case the start time of the key detail (223; 225; 227) associated to the current entity is after the end time of the obtained cache entry in the further row, performing the adding of the current entity to the current row of the cache table (500) and additionally adding the key detail (223; 225; 227) to the further row of the cache table (500) immediately behind the last cache entry of said further row,
i) in case the start time of the current entity is after the end time of the obtained cache entry and in case the start time of the key detail (223; 225; 227) associated to the current entity is before or equal the end time of the obtained cache entry in the further row, selecting the next row in the cache table (500) directly below the current row as the current row and repeating steps b)-c).

3. The method of claim 2, wherein in case in step h) it is determined that the start time of the key detail (223; 225; 227) associated to the current entity is after the end time of the obtained cache entry in the further row, the method further comprises repeating steps f)-i) for an increasing number of N starting with N=1 until N equals M, wherein N and M are integer values, wherein the value M is associated with the key detail (223; 225; 227) of the current entity.

4. The method of claim 3, wherein the value M is a customizable parameter for each key detail (223; 225; 227) or each data entity having an associated key detail.

5. The method of any of the previous claims, wherein in case a selected row in the cache table (500) is not yet available, the method further comprises adding an empty new row to the cache table (500) at the position in the cache table (500) where the row was intended to be selected.

6. The method of any of the previous claims, further comprising
- establishing a communication channel via the telecommunication network (620) between the device and the server (630; 650),
- sending a request to the server (630; 650), the request requesting the data entities (122; 124; 126; 222; 224; 226), and in response receiving from the server (630; 650) the data entities (122; 124; 126; 222; 224; 226),
- sending a request to the server (630; 650), the request requesting only the key details (223; 225; 227) which associated data entities (122; 124; 126; 222; 224; 226) have a start time within the second time period, and in response receiving from the server (630; 650) the key details (223; 225; 227).

7. The method of any of the previous claims, wherein the portable electronic device comprises a battery for powering up the portable electronic device, wherein the portable electronic device is operable for switching into a power saving mode by disabling a functionality of displaying the elements on the graphical user interface using scrolling display functions on the graphical user interface of the device.

8. The method of any of the previous claims, wherein the start time and/or the end time of the key detail (223; 225; 227) is based on the start time or the end time of the data entity associated to said key detail (223; 225; 227) by shifting the start time or the end time of the data entity by a predefined timespan.

9. The method of any of the previous claims, wherein the graphical user interface is adapted for drawing the elements using image coordinates of the graphical user interface, the method further comprising for drawing the elements in step d):
- determining for the element to be drawn the time in the timeline that is located as close as possible to the start time of the element,
- determining for said determined time as a horizontal start coordinate the respective coordinate on the graphical user interface,
- determining the number of units of time between the start time and the end time of the timespan,
- calculating the width of the element by multiplying the difference between the start time and the end time of the element with the number of coordinates per unit of time,
- determining the vertical coordinate of the row where the element is to be placed,.
- determining the height of the element,
- drawing the element as a graphical container, using as a start coordinate of the container the vertical coordinate of the row and the determined horizontal start coordinate, and using as a height of the container the height of the element, and using as a width of the container the width of the element.

10. A telecommunication network (620) for power-saving, the network (620) comprising a server (630; 650) and a portable electronic device,
- the server (630; 650) comprising a database comprising elements, said elements comprising data entities (122; 124; 126; 222; 224; 226), wherein each data entity is representative of a data information content and a first time period specified by said data entity, each first time period specifying a respective start and end time, wherein the start and end times comprise the lower limit and the upper limit of the time interval defined by the first time period respectively,
- the portable electronic device comprising a cache table (500) with cache entries and a graphical user interface for displaying the data entities (122; 124; 126; 222; 224; 226),
- the cache table (500) being adapted for storing the cache entries in rows, each row comprising one or more consecutive cache entries, said cache entry is representing the element indicating at least the end time of said element,
- the graphical user interface being adapted for displaying a timeline, the timeline representing a time interval defined by a second time period,
- the portable electronic device comprising a processor (612) and a memory (613; 611), the cache table (500) being stored in the memory, the memory comprising computer executable instructions that cause the processor for sorting the data entities (122; 124; 126; 222; 224; 226) according to their start times of their respective first time periods for obtaining an ordered set of successive data entities (122; 124; 126; 222; 224; 226), said ordered set having a sort order, wherein the instructions further cause the processor with a current entity being the first data entity in the ordered set that has a start time within the second time period:
a) defining the first row in the cache table (500) as a current row,
b) obtaining from the cache table (500) the last cache entry in the current row,
c) comparing the start time of the current entity with the end time indicated by the retrieved cache entry, wherein in case the start time of the current entity is after the end time of the obtained cache entry, adding the current entity to the current row of the cache table (500) immediately behind the last cache entry, wherein in case the current entity start time is before or equal to the end time indicated by the obtained cache entry, selecting the next row in the cache table (500) directly below the current row as the current row and repeating steps b)-c),
d) selecting the next data entity in the ordered set of successive data entities (122; 124; 126; 222; 224; 226), said next data entity being the data entity following the current entity according to the order and which has a start time within the second time period, wherein the current entity is now given by said selected next data entity, and repeating steps a)-d),
e) drawing the elements represented via their cache entries of the cache table (500) on the graphical user interface, wherein the elements are drawn in rows identically cloning the row structure in which the elements are represented via their cache entries in the cache table (500), wherein in each row, the elements are drawn in the sequence as they are represented for the respective row by their cache entries in the cache table (500).

11. A portable electronic device, the device being adapted for communicating with a server (630; 650) over a telecommunication network (620),
- the server (630; 650) comprising a database comprising elements, said elements comprising data entities (122; 124; 126; 222; 224; 226), wherein each data entity is representative of a data information content and a first time period specified by said data entity, each first time period specifying a respective start and end time, wherein the start and end times comprise the lower limit and the upper limit of the time interval defined by the first time period respectively,
- the portable electronic device comprising a cache table (500) with cache entries and a graphical user interface for displaying the data entities (122; 124; 126; 222; 224; 226),
- the cache table (500) being adapted for storing the cache entries in rows, each row comprising one or more consecutive cache entries, said cache entry is representing the element indicating at least the end time of said element,
- the graphical user interface being adapted for displaying a timeline, the timeline representing a time interval defined by a second time period,
- the portable electronic device comprising a processor and a memory, the cache table (500) being stored in the memory, the memory comprising computer executable instructions that cause the processor for sorting the data entities (122; 124; 126; 222; 224; 226) according to their start times of their respective first time periods for obtaining an ordered set of successive data entities (122; 124; 126; 222; 224; 226), said ordered set having a sort order, wherein the instructions further cause the processor with a current entity being the first data entity in the ordered set that has a start time within the second time period:
a) defining the first row in the cache table (500) as a current row,
b) obtaining from the cache table (500) the last cache entry in the current row,
c) comparing the start time of the current entity with the end time indicated by the retrieved cache entry, wherein in case the start time of the current entity is after the end time of the obtained cache entry, adding the current entity to the current row of the cache table (500) immediately behind the last cache entry, wherein in case the current entity start time is before or equal to the end time indicated by the obtained cache entry, selecting the next row in the cache table (500) directly below the current row as the current row and repeating steps b)-c),
d) selecting the next data entity in the ordered set of successive data entities (122; 124; 126; 222; 224; 226), said next data entity being the data entity following the current entity according to the order and which has a start time within the second time period, wherein the current entity is now given by said selected next data entity, and repeating steps a)-d),
e) drawing the elements represented via their cache entries of the cache table (500) on the graphical user interface, wherein the elements are drawn in rows identically cloning the row structure in which the elements are represented via their cache entries in the cache table (500), wherein in each row, the elements are drawn in the sequence as they are represented for the respective row by their cache entries in the cache table (500).

12. A method for power-saving in a portable electronic device, the device being adapted for communicating with a server (630; 650) over a telecommunication network (620),
- the server (630; 650) comprising a database comprising elements, said elements comprising data entities (122; 124; 126; 222; 224; 226), wherein each data entity is representative of a data information content and a first time period specified by said data entity, each first time period specifying a respective start and end time, wherein the start and end times comprise the lower limit and the upper limit of the time interval defined by the first time period respectively,
- the portable electronic device comprising a cache table (500) with cache entries and a graphical user interface for displaying the data entities (122; 124; 126; 222; 224; 226),
- the cache table (500) being adapted for storing the cache entries in rows, each row comprising one or more consecutive cache entries, said cache entry is representing the element indicating at least the end time of said element,
- the graphical user interface being adapted for displaying a timeline, the timeline representing a time interval defined by a second time period,
the method comprising at the device sorting the data entities (122; 124; 126; 222; 224; 226) according to their start times of their respective first time periods for obtaining an ordered set of successive data entities (122; 124; 126; 222; 224; 226), said ordered set having a sort order, wherein the method further comprises with a current entity being the first data entity in the ordered set that has a start time within the second time period, the steps of:
a) defining the first row in the cache table (500) as a current row,
b) obtaining from the cache table (500) the last cache entry in the current row,
c) comparing the start time of the current entity with the end time indicated by the retrieved cache entry, wherein in case the start time of the current entity is after the end time of the obtained cache entry, adding the current entity to the current row of the cache table (500) immediately behind the last cache entry, wherein in case the current entity start time is before or equal to the end time indicated by the obtained cache entry, selecting the next row in the cache table (500) directly below the current row as the current row and repeating steps b)-c),
d) selecting the next data entity in the ordered set of successive data entities (122; 124; 126; 222; 224; 226), said next data entity being the data entity following the current entity according to the order and which has a start time within the second time period, wherein the current entity is now given by said selected next data entity, and repeating steps a)-d),
e) drawing the elements represented via their cache entries of the cache table (500) on the graphical user interface, wherein the elements are drawn in rows identically cloning the row structure in which the elements are represented via their cache entries in the cache table (500), wherein in each row, the elements are drawn in the sequence as they are represented for the respective row by their cache entries in the cache table (500).

13. A computer program product, in particular a computer readable medium, the computer program product carrying computer executable code for execution by a processor controlling an apparatus, wherein execution of the instructions cause the processor to perform the method steps as claimed in the previous method claims.

## Patentansprüche

1. Verfahren zum Energiesparen in einem Telekommunikationsnetz (620), wobei das Netz (620) einen Server (630; 650) und ein tragbares elektronisches Gerät umfasst,
- wobei der Server (630; 650) eine Datenbank umfasst, die Elemente umfasst, wobei die Elemente Datenentitäten (122; 124; 126; 222; 224; 226) umfassen, wobei jede Datenentität einen Dateninformationsinhalt und einen ersten Zeitraum, der von der Datenentität spezifiziert wird, darstellt, wobei jeder erste Zeitraum eine jeweilige Start- und Endzeit spezifiziert, wobei die Start- und die Endzeiten die untere Grenze und die obere Grenze eines Zeitintervalls umfassen, die jeweils von dem ersten Zeitraum definiert werden,
- wobei das tragbare elektronische Gerät eine Cache-Tabelle (500) mit Cache-Einträgen und eine grafische Benutzeroberfläche zum Anzeigen der Datenentitäten (122; 124; 126; 222; 224; 226) umfasst,
- wobei die Cache-Tabelle (500) zum Speichern der Cache-Einträge in Zeilen eingerichtet ist, wobei jede Zeile ein oder mehrere aufeinanderfolgende Cache-Einträge umfasst, wobei der Cache-Eintrag das Element darstellt, das mindestens die Endzeit des Elements angibt,
- wobei die grafische Benutzeroberfläche zum Anzeigen einer Zeitleiste eingerichtet ist, wobei die Zeitleiste ein Zeitintervall darstellt, das von einem zweiten Zeitraum definiert wird, wobei das Verfahren das Sortieren der Datenentitäten (122; 124; 126; 222; 224; 226) an dem Gerät gemäß ihrer Startzeiten ihrer jeweiligen ersten Zeiträume zum Erhalten eines geordneten Satzes von fortlaufenden Datenentitäten (122; 124; 126; 222; 224; 226) umfasst, wobei der geordnete Satz eine Sortierreihenfolge hat, wobei das Verfahren weiterhin die folgenden Schritte umfasst, wobei eine aktuelle Entität die erste Datenentität in dem geordneten Satz ist, die eine Startzeit innerhalb des zweiten Zeitraums hat:
a) Definieren der ersten Zeile in der Cache-Tabelle (500) als eine aktuelle Zeile,
b) Beziehen des letzten Cache-Eintrags in der aktuellen Zeile aus der Cache-Tabelle (500),
c) Vergleichen der Startzeit der aktuellen Entität mit der Endzeit, die von dem abgerufenen Cache-Eintrag angegeben wird, wobei in dem Fall, in dem die Startzeit der aktuellen Entität nach der Endzeit des bezogenen Cache-Eintrags ist, die aktuelle Entität zu der aktuellen Zeile der Cache-Tabelle (500) unmittelbar hinter dem letzten Cache-Eintrag hinzugefügt wird, wobei in dem Fall, in dem die Startzeit der aktuellen Entität vor oder gleich der Endzeit ist, die von dem bezogenen Cache-Eintrag angegeben wird, die nächste Zeile in der Cache-Tabelle (500) direkt unter der aktuellen Zeile als die aktuelle Zeile ausgewählt wird und die Schritte b)-c) wiederholt werden,
d) Auswählen der nächsten Datenentität in dem geordneten Satz von fortlaufenden Datenentitäten (122; 124; 126; 222; 224; 226), wobei die nächsten Datenentität die Datenentität ist, die auf die aktuelle Entität gemäß der Reihenfolge folgt und die eine Startzeit innerhalb des zweiten Zeitraums hat, wobei die aktuelle Entität nun durch die ausgewählte nächste Datenentität vorgegeben wird, und Wiederholen der Schritte a)-d),
e) Zeichnen der Elemente, die mittels ihrer Cache-Einträge der Cache-Tabelle (500) dargestellt sind, auf der grafischen Benutzeroberfläche, wobei die Elemente in Zeilen gezeichnet werden, wobei die Zeilenstruktur identisch geklont wird, in der die Elemente mittels ihrer Cache-Einträge in der Cache-Tabelle (500) dargestellt sind, wobei in jeder Zeile die Elemente in der Abfolge gezeichnet werden, in der sie für die jeweilige Zeile durch ihre Cache-Einträge in der Cache-Tabelle (500) dargestellt sind.

2. Verfahren nach Anspruch 1, wobei die Elemente weiterhin wichtige Details (223; 225; 227) umfassen, wobei mit mindestens einigen der Datenentitäten (122; 124; 126; 222; 224; 226) ein jeweiliges wichtiges Detail assoziiert ist, wobei das wichtige Detail (223; 225; 227) zusätzlichen Informationsinhalt für die jeweilige Datenentität umfasst, wobei in dem Fall, in dem mit einem Cache-Eintrag ein jeweiliges der wichtigen Details (223; 225; 227) assoziiert ist, der Cache-Eintrag, der mit dem wichtigen Detail (223; 225; 227) assoziiert ist, mindestens eine Endzeit des wichtigen Details angibt, wobei das Verfahren weiterhin das Zuweisen einer Startzeit und der Endzeit auf der Basis der Startzeit oder der Endzeit der Datenentität, die mit dem wichtigen Detail assoziiert ist, zu jedem wichtigen Detail (223; 225; 227), wobei das Durchführen der Schritte a)-e) weiterhin Folgendes umfasst:
f) Auswählen einer weiteren Zeile aus der Cache-Tabelle (500), wobei die weitere Zeile sich direkt eine Anzahl von N Zeilen unter der aktuellen Zeile befindet,
g) Beziehen des letzten Cache-Eintrags in der weiteren Zeile aus der Cache-Tabelle (500),
h) nur in dem Fall, in dem die Startzeit der aktuellen Entität nach der Endzeit des bezogenen Cache-Eintrags ist, und in dem Fall, in dem die Startzeit des wichtigen Details (223; 225; 227), das mit der aktuellen Entität assoziiert ist, nach der Endzeit des bezogenen Cache-Eintrags in der weiteren Zeile ist, Durchführen des Hinzufügens der aktuellen Entität zu der aktuellen Zeile der Cache-Tabelle (500) und zusätzliches Hinzufügen des wichtigen Details (223; 225; 227) zu der weiteren Zeile der Cache-Tabelle (500) unmittelbar hinter dem letzten Cache-Eintrag der weiteren Zeile,
i) in dem Fall, in dem die Startzeit der aktuellen Entität nach der Endzeit des bezogenen Cache-Eintrags ist, und in dem Fall, in dem die Startzeit des wichtigen Details (223; 225; 227), das mit der aktuellen Entität assoziiert ist, vor oder gleich der Endzeit des bezogenen Cache-Eintrags in der weiteren Zeile ist, Auswählen der nächsten Zeile in der Cache-Tabelle (500) direkt unter der aktuellen Zeile als die aktuelle Zeile und Wiederholen der Schritte b)-c).

3. Verfahren nach Anspruch 2, wobei in dem Fall, in dem in Schritt h) bestimmt wird, dass die Startzeit des wichtigen Details (223; 225; 227), das mit der aktuellen Entität assoziiert ist, nach der Endzeit des bezogenen Cache-Eintrags in der weiteren Zeile ist, das Verfahren weiterhin das Wiederholen der Schritte f)-i) für eine ansteigende Anzahl von N umfasst, die mit N = 1 startet, bis N gleich M ist, wobei N und M ganze Zahlenwerte sind, wobei der Wert M mit dem wichtigen Detail (223; 225; 227) der aktuellen Entität assoziiert ist.

4. Verfahren nach Anspruch 3, wobei der Wert M ein anpassbarer Parameter für jedes wichtige Detail (223; 225; 227) oder jede Datenentität mit einem assoziierten wichtigen Detail ist.

5. Verfahren nach einem der vorhergehenden Ansprüche, wobei in dem Fall, in dem eine ausgewählte Zeile in der Cache-Tabelle (500) noch nicht verfügbar ist, das Verfahren weiterhin das Hinzufügen einer leeren neuen Zeile zu der Cache-Tabelle (500) an der Position in der Cache-Tabelle (500), an der die Zeile ausgewählt werden sollte, umfasst.

6. Verfahren nach einem der vorhergehenden Ansprüche, das weiterhin Folgendes umfasst:
- Herstellen eines Kommunikationskanals mittels des Telekommunikationsnetzes (620) zwischen dem Gerät und dem Server (630; 650),
- Senden einer Anforderung an den Server (630; 650), wobei die Anforderung die Datenentitäten (122; 124; 126; 222; 224; 226) anfordert, und als Reaktion Empfangen der Datenentitäten (122; 124; 126; 222; 224; 226) von dem Server (630; 650),
- Senden einer Anforderung an den Server (630; 650), wobei die Anforderung nur die wichtigen Details (223; 225; 227) anfordert, deren assoziierte Datenentitäten (122; 124; 126; 222; 224; 226) eine Startzeit innerhalb des zweiten Zeitraums haben, und als Reaktion Empfangen der wichtigen Details (223; 225; 227) von dem Server (630; 650).

7. Verfahren nach einem der vorhergehenden Ansprüche, wobei das tragbare elektronische Gerät eine Batterie zum Hochfahren des tragbaren elektronischen Geräts umfasst, wobei das tragbare elektronische Gerät zum Schalten in einen Energiesparmodus betreibbar ist, indem eine Funktionalität des Anzeigens der Elemente auf der grafischen Benutzeroberfläche unter Verwendung von Bilddurchlaufanzeigefunktionen auf der grafischen Benutzeroberfläche des Geräts deaktiviert wird.

8. Verfahren nach einem der vorhergehenden Ansprüche, wobei die Startzeit und/oder die Endzeit des wichtigen Details (223; 225; 227) auf der Startzeit oder der Endzeit der Datenentität, die mit dem wichtigen Detail (223; 225; 227) assoziiert ist, basiert wird, indem die Startzeit oder die Endzeit der Datenentität um eine vordefinierte Zeitspanne verschoben wird.

9. Verfahren nach einem der vorhergehenden Ansprüche, wobei die grafische Benutzeroberfläche zum Zeichnen der Elemente unter Verwendung von Bildkoordinaten der grafischen Benutzeroberfläche eingerichtet ist, wobei das Verfahren weiterhin zum Zeichnen der Elemente in Schritt d) Folgendes umfasst:
- Bestimmen der Zeit in der Zeitleiste für das zu zeichnende Element, die sich so nahe wie möglich an der Startzeit des Elements befindet,
- Bestimmen der jeweiligen Koordinate als eine horizontale Startkoordinate auf der grafischen Benutzeroberfläche für die bestimmte Zeit,
- Bestimmen der Anzahl von Zeiteinheiten zwischen der Startzeit und der Endzeit der Zeitspanne,
- Berechnen der Breite des Elements durch Multiplizieren der Differenz zwischen der Startzeit und der Endzeit des Elements mit der Anzahl von Koordinaten pro Zeiteinheit,
- Bestimmen der vertikalen Koordinate der Zeile, in der das Element platziert werden soll,
- Bestimmen der Höhe des Elements,
- Zeichnen des Elements als ein grafischer Container unter Verwendung der vertikalen Koordinate der Zeile und der bestimmten horizontalen Startkoordinate als eine Startkoordinate des Containers und unter Verwendung der Höhe des Elements als eine Höhe des Containers und unter Verwendung der Breite des Elements als eine Breite des Containers.

10. Telekommunikationsnetz (620) zum Energiesparen, wobei das Netz (620) einen Server (630; 650) und ein tragbares elektronisches Gerät umfasst,
- wobei der Server (630; 650) eine Datenbank umfasst, die Elemente umfasst, wobei die Elemente Datenentitäten (122; 124; 126; 222; 224; 226) umfassen, wobei jede Datenentität einen Dateninformationsinhalt und einen ersten Zeitraum, der von der Datenentität spezifiziert wird, darstellt, wobei jeder erste Zeitraum eine jeweilige Start- und Endzeit spezifiziert, wobei die Start- und die Endzeiten die untere Grenze und die obere Grenze des Zeitintervalls umfassen, die jeweils von dem ersten Zeitraum definiert werden,
- wobei das tragbare elektronische Gerät eine Cache-Tabelle (500) mit Cache-Einträgen und eine grafische Benutzeroberfläche zum Anzeigen der Datenentitäten (122; 124; 126; 222; 224; 226) umfasst,
- wobei die Cache-Tabelle (500) zum Speichern der Cache-Einträge in Zeilen eingerichtet ist, wobei jede Zeile ein oder mehrere aufeinanderfolgende Cache-Einträge umfasst, wobei der Cache-Eintrag das Element darstellt, das mindestens die Endzeit des Elements angibt,
- wobei die grafische Benutzeroberfläche zum Anzeigen einer Zeitleiste eingerichtet ist, wobei die Zeitleiste ein Zeitintervall darstellt, das von einem zweiten Zeitraum definiert wird,
- wobei das tragbare elektronische Gerät einen Prozessor (612) und einen Speicher (613; 611) umfasst, wobei die Cache-Tabelle (500) in dem Speicher gespeichert ist, wobei der Speicher computerausführbare Anweisungen umfasst, die bewirken, dass der Prozessor die Datenentitäten (122; 124; 126; 222; 224; 226) gemäß ihrer Startzeiten ihrer jeweiligen ersten Zeiträume zum Erhalten eines geordneten Satzes von fortlaufenden Datenentitäten (122; 124; 126; 222; 224; 226) sortiert, wobei der geordnete Satz eine Sortierreihenfolge hat, wobei die Anweisungen weiterhin bewirken, dass der Prozessor Folgendes durchführt, wobei eine aktuelle Entität die erste Datenentität in dem geordneten Satz ist, die eine Startzeit innerhalb des zweiten Zeitraums hat:
a) Definieren der ersten Zeile in der Cache-Tabelle (500) als eine aktuelle Zeile,
b) Beziehen des letzten Cache-Eintrags in der aktuellen Zeile aus der Cache-Tabelle (500),
c) Vergleichen der Startzeit der aktuellen Entität mit der Endzeit, die von dem abgerufenen Cache-Eintrag angegeben wird, wobei in dem Fall, in dem die Startzeit der aktuellen Entität nach der Endzeit des bezogenen Cache-Eintrags ist, die aktuelle Entität zu der aktuellen Zeile der Cache-Tabelle (500) unmittelbar hinter dem letzten Cache-Eintrag hinzugefügt wird, wobei in dem Fall, in dem die Startzeit der aktuellen Entität vor oder gleich der Endzeit ist, die von dem bezogenen Cache-Eintrag angegeben wird, die nächste Zeile in der Cache-Tabelle (500) direkt unter der aktuellen Zeile als die aktuelle Zeile ausgewählt wird und die Schritte b)-c) wiederholt werden,
d) Auswählen der nächsten Datenentität in dem geordneten Satz von fortlaufenden Datenentitäten (122; 124; 126; 222; 224; 226), wobei die nächsten Datenentität die Datenentität ist, die auf die aktuelle Entität gemäß der Reihenfolge folgt und die eine Startzeit innerhalb des zweiten Zeitraums hat, wobei die aktuelle Entität nun durch die ausgewählte nächste Datenentität vorgegeben wird, und Wiederholen der Schritte a)-d),
e) Zeichnen der Elemente, die mittels ihrer Cache-Einträge der Cache-Tabelle (500) dargestellt sind, auf der grafischen Benutzeroberfläche, wobei die Elemente in Zeilen gezeichnet werden, wobei die Zeilenstruktur identisch geklont wird, in der die Elemente mittels ihrer Cache-Einträge in der Cache-Tabelle (500) dargestellt sind, wobei in jeder Zeile die Elemente in der Abfolge gezeichnet werden, in der sie für die jeweilige Zeile durch ihre Cache-Einträge in der Cache-Tabelle (500) dargestellt sind.

11. Tragbares elektronisches Gerät, wobei das Gerät zum Kommunizieren mit einem Server (630; 650) über ein Telekommunikationsnetz (620) eingerichtet ist,
- wobei der Server (630; 650) eine Datenbank umfasst, die Elemente umfasst, wobei die Elemente Datenentitäten (122; 124; 126; 222; 224; 226) umfassen, wobei jede Datenentität einen Dateninformationsinhalt und einen ersten Zeitraum, der von der Datenentität spezifiziert wird, darstellt, wobei jeder erste Zeitraum eine jeweilige Start- und Endzeit spezifiziert, wobei die Start- und die Endzeiten die untere Grenze und die obere Grenze des Zeitintervalls umfassen, die jeweils von dem ersten Zeitraum definiert werden,
- wobei das tragbare elektronische Gerät eine Cache-Tabelle (500) mit Cache-Einträgen und eine grafische Benutzeroberfläche zum Anzeigen der Datenentitäten (122; 124; 126; 222; 224; 226) umfasst,
- wobei die Cache-Tabelle (500) zum Speichern der Cache-Einträge in Zeilen eingerichtet ist, wobei jede Zeile ein oder mehrere aufeinanderfolgende Cache-Einträge umfasst, wobei der Cache-Eintrag das Element darstellt, das mindestens die Endzeit des Elements angibt,
- wobei die grafische Benutzeroberfläche zum Anzeigen einer Zeitleiste eingerichtet ist, wobei die Zeitleiste ein Zeitintervall darstellt, das von einem zweiten Zeitraum definiert wird,
- wobei das tragbare elektronische Gerät einen Prozessor und einen Speicher umfasst, wobei die Cache-Tabelle (500) in dem Speicher gespeichert ist, wobei der Speicher computerausführbare Anweisungen umfasst, die bewirken, dass der Prozessor die Datenentitäten (122; 124; 126; 222; 224; 226) gemäß ihrer Startzeiten ihrer jeweiligen ersten Zeiträume zum Erhalten eines geordneten Satzes von fortlaufenden Datenentitäten (122; 124; 126; 222; 224; 226) sortiert, wobei der geordnete Satz eine Sortierreihenfolge hat, wobei die Anweisungen weiterhin bewirken, dass der Prozessor Folgendes durchführt, wobei eine aktuelle Entität die erste Datenentität in dem geordneten Satz ist, die eine Startzeit innerhalb des zweiten Zeitraums hat:
a) Definieren der ersten Zeile in der Cache-Tabelle (500) als eine aktuelle Zeile,
b) Beziehen des letzten Cache-Eintrags in der aktuellen Zeile aus der Cache-Tabelle (500),
c) Vergleichen der Startzeit der aktuellen Entität mit der Endzeit, die von dem abgerufenen Cache-Eintrag angegeben wird, wobei in dem Fall, in dem die Startzeit der aktuellen Entität nach der Endzeit des bezogenen Cache-Eintrags ist, die aktuelle Entität zu der aktuellen Zeile der Cache-Tabelle (500) unmittelbar hinter dem letzten Cache-Eintrag hinzugefügt wird, wobei in dem Fall, in dem die Startzeit der aktuellen Entität vor oder gleich der Endzeit ist, die von dem bezogenen Cache-Eintrag angegeben wird, die nächste Zeile in der Cache-Tabelle (500) direkt unter der aktuellen Zeile als die aktuelle Zeile ausgewählt wird und die Schritte b)-c) wiederholt werden,
d) Auswählen der nächsten Datenentität in dem geordneten Satz von fortlaufenden Datenentitäten (122; 124; 126; 222; 224; 226), wobei die nächsten Datenentität die Datenentität ist, die auf die aktuelle Entität gemäß der Reihenfolge folgt und die eine Startzeit innerhalb des zweiten Zeitraums hat, wobei die aktuelle Entität nun durch die ausgewählte nächste Datenentität vorgegeben wird, und Wiederholen der Schritte a)-d),
e) Zeichnen der Elemente, die mittels ihrer Cache-Einträge der Cache-Tabelle (500) dargestellt sind, auf der grafischen Benutzeroberfläche, wobei die Elemente in Zeilen gezeichnet werden, wobei die Zeilenstruktur identisch geklont wird, in der die Elemente mittels ihrer Cache-Einträge in der Cache-Tabelle (500) dargestellt sind, wobei in jeder Zeile die Elemente in der Abfolge gezeichnet werden, in der sie für die jeweilige Zeile durch ihre Cache-Einträge in der Cache-Tabelle (500) dargestellt sind.

12. Verfahren zum Energiesparen in einem tragbaren elektronischen Gerät, wobei das Gerät zum Kommunizieren mit einem Server (630; 650) über ein Telekommunikationsnetz (620) eingerichtet ist,
- wobei der Server (630; 650) eine Datenbank umfasst, die Elemente umfasst, wobei die Elemente Datenentitäten (122; 124; 126; 222; 224; 226) umfassen, wobei jede Datenentität einen Dateninformationsinhalt und einen ersten Zeitraum, der von der Datenentität spezifiziert wird, darstellt, wobei jeder erste Zeitraum eine jeweilige Start- und Endzeit spezifiziert, wobei die Start- und die Endzeiten die untere Grenze und die obere Grenze des Zeitintervalls umfassen, die jeweils von dem ersten Zeitraum definiert werden,
- wobei das tragbare elektronische Gerät eine Cache-Tabelle (500) mit Cache-Einträgen und eine grafische Benutzeroberfläche zum Anzeigen der Datenentitäten (122; 124; 126; 222; 224; 226) umfasst,
- wobei die Cache-Tabelle (500) zum Speichern der Cache-Einträge in Zeilen eingerichtet ist, wobei jede Zeile ein oder mehrere aufeinanderfolgende Cache-Einträge umfasst, wobei der Cache-Eintrag das Element darstellt, das mindestens die Endzeit des Elements angibt,
- wobei die grafische Benutzeroberfläche zum Anzeigen einer Zeitleiste eingerichtet ist, wobei die Zeitleiste ein Zeitintervall darstellt, das von einem zweiten Zeitraum definiert wird,
wobei das Verfahren das Sortieren der Datenentitäten (122; 124; 126; 222; 224; 226) an dem Gerät gemäß ihrer Startzeiten ihrer jeweiligen ersten Zeiträume zum Erhalten eines geordneten Satzes von fortlaufenden Datenentitäten (122; 124; 126; 222; 224; 226) umfasst, wobei der geordnete Satz eine Sortierreihenfolge hat, wobei das Verfahren weiterhin die folgenden Schritte umfasst, wobei eine aktuelle Entität die erste Datenentität in dem geordneten Satz ist, die eine Startzeit innerhalb des zweiten Zeitraums hat:
a) Definieren der ersten Zeile in der Cache-Tabelle (500) als eine aktuelle Zeile,
b) Beziehen des letzten Cache-Eintrags in der aktuellen Zeile aus der Cache-Tabelle (500),
c) Vergleichen der Startzeit der aktuellen Entität mit der Endzeit, die von dem abgerufenen Cache-Eintrag angegeben wird, wobei in dem Fall, in dem die Startzeit der aktuellen Entität nach der Endzeit des bezogenen Cache-Eintrags ist, die aktuelle Entität zu der aktuellen Zeile der Cache-Tabelle (500) unmittelbar hinter dem letzten Cache-Eintrag hinzugefügt wird, wobei in dem Fall, in dem die Startzeit der aktuellen Entität vor oder gleich der Endzeit ist, die von dem bezogenen Cache-Eintrag angegeben wird, die nächste Zeile in der Cache-Tabelle (500) direkt unter der aktuellen Zeile als die aktuelle Zeile ausgewählt wird und die Schritte b)-c) wiederholt werden,
d) Auswählen der nächsten Datenentität in dem geordneten Satz von fortlaufenden Datenentitäten (122; 124; 126; 222; 224; 226), wobei die nächsten Datenentität die Datenentität ist, die auf die aktuelle Entität gemäß der Reihenfolge folgt und die eine Startzeit innerhalb des zweiten Zeitraums hat, wobei die aktuelle Entität nun durch die ausgewählte nächste Datenentität vorgegeben wird, und Wiederholen der Schritte a)-d),
e) Zeichnen der Elemente, die mittels ihrer Cache-Einträge der Cache-Tabelle (500) dargestellt sind, auf der grafischen Benutzeroberfläche, wobei die Elemente in Zeilen gezeichnet werden, wobei die Zeilenstruktur identisch geklont wird, in der die Elemente mittels ihrer Cache-Einträge in der Cache-Tabelle (500) dargestellt sind, wobei in jeder Zeile die Elemente in der Abfolge gezeichnet werden, in der sie für die jeweilige Zeile durch ihre Cache-Einträge in der Cache-Tabelle (500) dargestellt sind.

13. Computerprogrammprodukt, insbesondere computerlesbarer Datenträger, wobei das Computerprogrammprodukt computerausführbaren Code zur Ausführung durch einen Prozessor, der eine Vorrichtung steuert, trägt, wobei die Ausführung der Anweisungen bewirkt, dass der Prozessor die wie in den vorherigen Verfahrensansprüchen beanspruchten Verfahrensschritte durchführt.

## Revendications

1. Procédé pour économiser l'énergie dans un réseau de télécommunication (620), le réseau (620) comprenant un serveur (630 ; 650) et un dispositif électronique portable,
- le serveur (630 ; 650) comprenant une base de données comprenant des éléments, lesdits éléments comprenant les entités de données (122 ; 124 ; 126 ; 222 ; 224 ; 226), où chaque entité de données est représentative du contenu de l'information des données et d'une première plage horaire spécifiée par ladite entité de données, chaque première plage horaire précisant des instants respectifs de démarrage et de fin, où les instants de démarrage et de fin comprennent la limite inférieure et la limite supérieure d'un intervalle de temps respectivement définies par la première plage horaire,
- le dispositif électronique portable comprenant un tableau de cache (500) avec des entrées de cache et une interface graphique utilisateur pour afficher les entités de données (122 ; 124 ; 126 ; 222 ; 224 ; 226),
- le tableau de cache (500) étant adapté pour stocker les entrées de cache sous forme de lignes, chaque ligne comprenant une ou plusieurs entrées consécutives de cache, une dite entrée de cache étant la représentation de l'élément indiquant au moins l'instant de fin dudit élément,
- l'interface graphique utilisateur étant adaptée pour afficher un historique, cet historique représentant l'intervalle de temps défini par une seconde plage horaire,
le procédé comprenant, au niveau du dispositif, le tri des entités de données (122 ; 124 ; 126 ; 222 ; 224 ; 226) en fonction de l'instant de démarrage de leurs premières plages horaires respectives pour obtenir un ensemble ordonné d'entités de données successives (122 ; 124 ; 126 ; 222 ; 224 ; 226), ledit ensemble ordonné ayant un ordre pour le tri, où le procédé comprend, en outre, avec une entité active qui est la première entité de données dans l'ensemble ordonné qui a un instant de démarrage dans la seconde plage horaire, les étapes de :
a) définition de la première ligne dans le tableau de cache (500) comme étant une ligne active,
b) d'obtention à partir du tableau de cache (500) de la dernière entrée de cache dans la ligne active,
c) de comparaison de l'instant de démarrage de l'entité active avec l'instant de fin indiqué par l'entrée de cache extraite, où, dans le cas où l'instant de démarrage de l'entité active est postérieur à l'instant de fin de l'entrée de cache obtenu, d'ajout de l'entité active à la ligne actuelle du tableau de cache (500) immédiatement derrière la dernière entrée de cache, où, dans le cas où l'instant de démarrage de l'entité active est antérieur ou simultané à l'instant de fin indiqué par l'entrée de cache obtenue, de choix de la ligne suivante dans le tableau de cache (500) directement sous la ligne active comme étant la ligne active et de répétition des étapes b) à c),
d) de choix de l'entité de données suivante dans l'ensemble ordonné des entités de données successives (122 ; 124 ; 126 ; 222 ; 224 ; 226), ladite entité de données suivante étant l'entité de données qui suit dans l'ordre l'entité active et qui a son instant de démarrage dans la seconde plage horaire, où l'entité active est maintenant donnée par ladite nouvelle entité de données choisie, et la répétition des étapes a) à d),
e) d'extraction des éléments représentés via leurs entrées de cache du tableau de cache (500) sur l'interface utilisateur graphique, dans lequel les éléments sont extraits en lignes reproduisant à l'identique la structure de la ligne dans laquelle les éléments sont représentés via leurs entrées de cache dans le tableau de cache (500), dans lequel dans chaque ligne, les éléments sont extraits selon la séquence dans laquelle ils sont représentés dans leur ligne respective par leurs entrées de cache dans le tableau de cache (500).

2. Procédé selon la revendication 1, dans lequel les éléments comprennent en outre des détails clés (223 ; 225 ; 227), où au moins plusieurs parmi les entités de données (122 ; 124 ; 126 ; 222 ; 224 ; 226) ont associé un détail clé respectif, ledit détail clé (223 ; 225 ; 227) comprenant le contenu de l'information complémentaire pour l'entité de données respective, où, dans le cas où une entrée de cache est associée avec l'un des détails clés (223 ; 225 ; 227) respectif, ladite entrée de cache associée avec le détail clé (223 ; 225 ; 227) indique au moins un instant de fin dudit détail clé, le procédé comprenant en outre l'attribution à chacun des détails clés (223 ; 225 ; 227) d'un instant de démarrage et d'un instant de fin basés sur l'instant de démarrage ou l'instant de fin de l'entité de données associée audit détail clé, où les étapes de réalisation a) à e) comprennent en outre
f) le choix d' une autre ligne à partir du tableau de cache (500), ladite autre ligne étant directement située à un nombre de N lignes au dessous de la ligne active,
g) l' obtention à partir du tableau de cache (500) de la dernière entrée de cache dans l'autre ligne,
h) seulement dans le cas où l'instant du démarrage de l'entité active est postérieur à l'instant de la fin de l'entrée de cache obtenue et dans le cas où l'instant du démarrage du détail clé (223 ; 225 ; 227) associé à l'entrée active est postérieur à l'instant de la fin de l'entrée de cache obtenue dans l'autre ligne, la réalisation de l'ajout de l'entité active à la ligne active du tableau de cache (500) et la réalisation de l'ajout de manière complémentaire du détail clé (223 ; 225 ; 227) à l'autre ligne du tableau de cache (500) immédiatement derrière la dernière entrée de cache de ladite autre ligne,
i) dans le cas où l'instant du démarrage de l'entité active est postérieur à l'instant de la fin de l'entrée de cache obtenue et dans le cas où l'instant du démarrage du détail clé (223 ; 225 ; 227) associé à l'entité active est antérieur ou simultané à l'instant de fin de l'entrée de cache obtenu dans l'autre ligne, le choix de la ligne suivante dans le tableau de cache (500) directement en dessous de la ligne active en tant que ligne active et la répétition des étapes b) à c).

3. Procédé selon la revendication 2, dans lequel, dans le cas où, dans l'étape h), on détermine que l'instant de démarrage du détail clé (223 ; 225 ; 227) associé à l'entité active est postérieur à l'instant de la fin de l'entrée de cache obtenue dans la ligne suivante, le procédé comprend en outre la répétition des étapes f) à i) pour un nombre croissant de N démarrant avec N = 1 jusqu'à N égal M, dans lequel N et M sont des valeurs entières, dans lequel la valeur M est associée avec le détail clé (223 ; 225 ; 227) de l'entité active.

4. Procédé selon la revendication 3, dans lequel la valeur M est un paramètre modulable pour chacun des détails clés (223 ; 225 ; 227) ou chacune des entités de données qui a un détail clé associé.

5. Procédé selon l'une quelconque des revendications précédentes, dans lequel, au cas où une ligne choisie dans le tableau de cache (500) n'est pas encore disponible, le procédé comprend en outre l'ajout d'une nouvelle ligne vide au tableau de cache (500) à un endroit du tableau de cache (500) où la ligne est destinée à être choisie.

6. Procédé selon l'une quelconque des revendications précédentes, comprenant en outre
- l'établissement d'un canal de communication via le réseau de télécommunication (620) entre le dispositif et le serveur (630 ; 650),
- l'envoi d'une requête au serveur (630 ; 650), la requête portant sur les entités de données (122 ; 124 ; 126 ; 222 ; 224 ; 226), et, en réponse, la réception à partir du serveur (630 ; 650) des entités de données (122 ; 124 ; 126 ; 222 ; 224 ; 226),
- l'envoi d'une requête au serveur (630 ; 650), la requête portant uniquement sur les détails clés (223 ; 225 ; 227) dont les entités de données (122 ; 124 ; 126 ; 222 ; 224 ; 226) associées ont un instant de démarrage dans la seconde plage horaire, et en réponse, la réception à partir du serveur (630 ; 650) des détails clés (223 ; 225 ; 227).

7. Procédé selon l'une quelconque des revendications précédentes, dans lequel le dispositif électronique portable comprend une batterie pour fournir l'énergie au dispositif électronique portable, dans lequel le dispositif électronique portable est utilisable pour passer en mode économie d'énergie en désactivant une fonctionnalité d'affichage des éléments sur l'interface utilisateur graphique en utilisant les fonctions d'affichage de défilement sur l'interface utilisateur graphique du dispositif.

8. Procédé selon l'une quelconque des revendications précédentes, dans lequel l'instant de démarrage et/ou l'instant de fin du détail clé (223 ; 225 ; 227) est fondé sur l'instant de démarrage ou l'instant de fin de l'entité de données associée audit détail clé (223 ; 225 ; 227) en décalant l'instant du démarrage ou l'instant de fin de l'entité de données au moyen d'un laps de temps prédéfini.

9. Procédé selon l'une quelconque des revendications précédentes, dans lequel l'interface utilisateur graphique est adaptée pour extraire les éléments utilisant les coordonnées d'image de l'interface utilisateur graphique, le procédé comprenant en outre, pour l'extraction des éléments dans l'étape d) :
- la détermination pour l'élément à extraire de la durée dans l'historique qui est située le plus près possible de l'instant du démarrage de l'élément,
- la détermination pour ladite durée déterminée de la coordonnée respective sur l'interface utilisateur graphique en tant que coordonnée de démarrage horizontale,
- la détermination du nombre d'unités de temps entre l'instant de démarrage et l'instant de fin du laps de temps,
- le calcul de la largeur de l'élément par la multiplication de la différence entre l'instant de démarrage et l'instant de fin de l' élément avec le nombre des coordonnées par unité de temps,
- la détermination de la coordonnée verticale de la ligne dans laquelle l'élément doit être placé,
- la détermination de la hauteur de l'élément,
- l'extraction de l'élément comme un récipient graphique, en utilisant comme coordonnée de démarrage du récipient la coordonnée verticale de la ligne et la coordonnée de démarrage horizontale déterminée, et en utilisant comme hauteur du récipient la hauteur de l'élément, et en utilisant comme largeur du récipient la largeur de l'élément.

10. Réseau de télécommunication (620) pour économie d'énergie, le réseau (620) comprenant un serveur (630 ; 650) et un dispositif électronique portable,
- le serveur (630 ; 650) comprenant une base de données comprenant des éléments, lesdits éléments comprenant les entités de données (122 ; 124 ; 126 ; 222 ; 224 ; 226), où chaque entité de données est représentative du contenu d'une information des données et d'une première plage horaire spécifiés par ladite entité de données, chaque première plage horaire précisant les instants respectifs de son démarrage et de sa fin, dans lequel des instants de démarrage et de fin comprennent une limite inférieure et une limite supérieure de l'intervalle de temps respectivement définies par la première plage horaire,
- le dispositif électronique portable comprenant un tableau de cache (500) avec des entrées de cache et une interface utilisateur graphique pour afficher les entités de données (122 ; 124 ; 126 ; 222 ; 224 ; 226),
- le tableau de cache (500) étant adapté pour le stockage des entrées de cache dans les lignes, chacune des lignes comprenant une ou plusieurs entrées consécutives de cache, ladite entrée de cache représente l'élément indiquant au moins l'instant de fin dudit élément,
- l'interface utilisateur graphique étant adaptée pour afficher un historique, l'historique représentant un intervalle de temps défini par une seconde plage horaire,
- le dispositif électronique portable comprenant un processeur (612) et une mémoire (613 ; 611), le tableau de cache (500) étant stocké dans la mémoire, la mémoire comprenant des instructions exécutables par ordinateur qui amènent le processeur à trier les entités de données (122 ; 124 ; 126 ; 222 ; 224 ; 226) en fonction des instants du démarrage de leurs premières plages horaires respectives pour obtenir un ensemble ordonné des entités de données successives (122 ; 124 ; 126 ; 222 ; 224 ; 226), ledit ensemble ordonné ayant un ordre pour le tri, dans lequel les instructions amènent le processeur à activer une entité qui est la première entité de données dans l'ensemble ordonné qui a un instant de démarrage dans la seconde plage horaire :
a) qui définit la première ligne dans le tableau de cache (500) en tant que ligne active,
b) qui obtient à partir du tableau de cache (500) la dernière entrée de cache dans la ligne active,
c) qui compare l'instant de démarrage de l'entité active avec l'instant de fin indiqué par l'entrée de cache récupérée, où, dans le cas où l'instant de démarrage de l'entité active est postérieur à l'instant de fin de l'entrée de cache obtenue, ajoute l'entité active à la ligne active du tableau de cache (500) immédiatement derrière la dernière entrée de cache, où, dans le cas où l'instant du démarrage de l'entité active est antérieur ou simultané avec l'instant de la fin indiqué par l'entrée de cache obtenue, choisit la ligne suivante dans le tableau de cache (500) directement en dessous de la ligne active en tant que ligne active et répète les étapes b) à c),
d) qui choisit la prochaine entité de données dans l'ensemble ordonné des entités de données successives (122 ; 124 ; 126 ; 222 ; 224 ; 226), ladite prochaine entité de données étant l'entité de données suivant dans l'ordre l'entité active et qui a l'instant de son démarrage dans la seconde plage horaire, dans lequel l'entité active est maintenant donnée par ladite prochaine entité de données choisie, et répète les étapes a) à d),
e) qui extrait les éléments représentés via leurs entrées de cache du tableau de cache (500) sur l'interface personnel graphique, dans lequel les éléments sont extraits en lignes reproduisant à l'identique la structure de la ligne dans laquelle les éléments sont représentés via leurs entrées de cache dans le tableau de cache (500), où, dans chacune des lignes, les éléments sont extraits selon la séquence dans laquelle ils sont représentés dans leur ligne respective par leurs entrées de cache du tableau de cache (500).

11. Dispositif électronique portable, le dispositif étant adapté pour communiquer avec un serveur (630 ; 650) par un réseau de télécommunication (620),
- le serveur (630 ; 650) comprenant une base de données comprenant des éléments, lesdits éléments comprenant les entités de données (122 ; 124 ; 126 ; 222 ; 224 ; 226), où chacune des entités de données est représentative du contenu de l'information des données et d'une première plage horaire spécifiée par ladite entité de données, chaque première plage horaire précisant les instants respectifs de démarrage et de fin, où les instants de démarrage et de fin comprennent la limite inférieure et la limite supérieure de l'intervalle de temps respectivement définies par la première plage horaire,
- le dispositif électronique portable comprenant un tableau de cache (500) avec des entrées de cache et une interface utilisateur graphique pour afficher les entités de données (122 ; 124 ; 126 ; 222 ; 224 ; 226),
- le tableau de cache (500) étant adapté pour le stockage des entrées de cache dans les lignes, chacune des lignes comprenant une ou plusieurs entrées consécutives de cache, ladite entrée de cache représente l'élément indiquant au moins l'instant de la fin dudit élément,
- l'interface utilisateur graphique étant adaptée pour afficher un historique, l'historique représentant un intervalle de temps défini par une seconde plage horaire,
- le dispositif électronique portable comprenant un processeur et une mémoire, le tableau de cache (500) étant stocké dans la mémoire, la mémoire comprenant des instructions exécutables par ordinateur qui amènent le processeur à trier les entités de données (122 ; 124 ; 126 ; 222 ; 224 ; 226) en fonction de leurs instants de démarrage de leurs premières plages horaires respectives pour obtenir un ensemble ordonné des entités de données successives (122 ; 124 ; 126 ; 222 ; 224 ; 226), ledit ensemble ordonné ayant un ordre pour le tri, où les instructions amènent en outre le processeur à activer une entité qui est la première entité de données dans l'ensemble ordonné qui a un instant de démarrage dans la seconde plage horaire :
a) qui définit la première ligne dans le tableau de cache (500) en tant que ligne active,
b) qui obtient à partir du tableau de cache (500) la dernière entrée de cache dans la ligne active,
c) qui compare l'instant de démarrage de l'entité active avec l'instant de fin indiqué par l'entrée de cache récupérée, où, dans le cas où l'instant du démarrage de l'entité active est postérieur à l'instant de fin de l'entrée de cache obtenue, ajoute l'entité active à la ligne active du tableau de cache (500) immédiatement derrière la dernière entrée de cache, où, dans le cas où l'instant de démarrage de l'entité active est antérieur ou simultané avec l'instant de fin indiqué par l'entrée de cache obtenue, choisit la ligne suivante dans le tableau de cache (500) directement en dessous de la ligne active en tant que ligne active et répète les étapes b) à c),
d) qui choisit la prochaine entité de données dans l'ensemble ordonné des entités de données successives (122 ; 124 ; 126 ; 222 ; 224 ; 226), ladite prochaine entité de données étant l'entité de données qui suit dans l'ordre l'entité active et qui a l'instant de démarrage dans la seconde plage horaire, où l'entité active est maintenant donnée par ladite prochaine entité de données choisie, et répète les étapes a) à d),
e) qui extrait les éléments représentés via leurs entrées de cache du tableau de cache (500) sur l'interface personnel graphique, où les éléments sont extraits en lignes reproduisant à l'identique la structure de la ligne dans laquelle les éléments sont représentés via leurs entrées de cache dans le tableau de cache (500), où, dans chacune des lignes, les éléments sont extraits selon la séquence dans laquelle ils sont représentés dans leur ligne respective par leurs entrées de cache du tableau de cache (500).

12. Procédé pour économiser l'énergie dans un dispositif électronique portable, le dispositif étant adapté pour communiquer avec un serveur (630 ; 650) par un réseau de télécommunication (620),
- le serveur (630 ; 650) comprenant une base de données comprenant des éléments, lesdits éléments comprenant les entités de données (122 ; 124 ; 126 ; 222 ; 224 ; 226), où chacune des entités de données est représentative du contenu de l'information des données et d'une première plage horaire spécifiée par ladite entité de données, chaque première plage horaire précisant les instants respectifs de démarrage et de fin, où les instants de démarrage et de fin comprennent la limite inférieure et la limite supérieure de l'intervalle de temps respectivement définies par la première plage horaire,
- le dispositif électronique portable comprenant un tableau de cache (500) avec des entrées de cache et une interface utilisateur graphique pour afficher les entités de données (122 ; 124 ; 126 ; 222 ; 224 ; 226),
- le tableau de cache (500) étant adapté pour le stockage des entrées de cache dans les lignes, chacune des lignes comprenant une ou plusieurs entrées consécutives de cache, ladite entrée de cache représente l'élément indiquant au moins l'instant de fin dudit élément,
- l'interface utilisateur graphique étant adaptée pour afficher un historique, l'historique représentant un intervalle de temps défini par une seconde plage horaire,
le procédé comprenant au niveau du dispositif le tri des entités de données (122 ; 124 ; 126 ; 222 ; 224 ; 226) en fonction des instants de démarrage de leurs premières plages horaires respectives pour obtenir un ensemble ordonné des entités de données successives (122 ; 124 ; 126 ; 222 ; 224 ; 226), ledit ensemble ordonné ayant un ordre pour le tri, où le procédé comprend en outre, avec une entité active qui est la première entité de données dans l'ensemble ordonné qui a l'instant de démarrage dans la seconde plage horaire, les étapes de :
a) la définition de la première ligne dans le tableau de cache (500) en tant que ligne active,
b) l'obtention à partir du tableau de cache (500) de la dernière entrée de cache dans la ligne active,
c) la comparaison de l'instant de démarrage de l'entité active avec l'instant de fin indiqué par l'entrée de cache récupérée, où, dans le cas où l'instant de démarrage de l'entité active est postérieur à l'instant de fin de l'entrée de cache obtenue, d'ajout de l'entité active à la ligne active du tableau de cache (500) immédiatement derrière la dernière entrée de cache, où, dans le cas où l'instant de démarrage de l'entité active est antérieur ou simultané avec l'instant de fin indiqué par l'entrée de cache obtenue, le choix de la ligne suivante dans le tableau de cache (500) directement en dessous de la ligne active en tant que ligne active et la répétition des étapes b) à c),
d) du choix de la prochaine entité de données dans l'ensemble ordonné des entités de données successives (122 ; 124 ; 126 ; 222 ; 224 ; 226), ladite prochaine entité de données étant l'entité de données qui suit dans l'ordre l'entité active et qui a un instant de démarrage dans la seconde plage horaire, où l'entité active est maintenant donnée par ladite prochaine entité de données choisie, et la répétition des étapes a) à d),
e) de l'extraction des éléments représentés via leurs entrées de cache du tableau de cache (500) sur l'interface personnel graphique, dans lequel les éléments sont extraits en lignes reproduisant à l'identique la structure de la ligne dans laquelle les éléments sont représentés via leurs entrées de cache dans le tableau de cache (500), où, dans chacune des lignes, les éléments sont extraits selon la séquence dans laquelle ils sont représentés dans leur ligne respective par leurs entrées de cache du tableau de cache (500).

13. Produit de programme informatique, notamment support lisible par ordinateur, le produit de programme informatique portant un code exécutable par ordinateur pour l'exécution par le processeur contrôlant l'appareil, dans lequel l'exécution des instructions amène le processeur à réaliser les étapes du procédé telles que revendiquées dans les revendications précédentes du procédé.
